# EUROPEAN PATENT APPLICATION

(11) **EP 4 478 363 A1**
(43) Date of publication of application: **18.12.2024**
(21) Application number: 23179237.5
(22) Date of filing: 14.06.2023
(51) Int. Cl.: G11C 13/00, G11C 7/24, G06F 7/58, H04L 9/08

(54) **METHODS OF GENERATING RANDOM PATTERNS AND IDENTIFICATION APPARATUS**

(71) Applicant: Huawei Technologies Co., Ltd., Shenzhen, Guangdong 518129 (CN)
(72) Inventor: Barci, Marinela, 80992 Munich (DE); Wu, Hao, 80992 Munich (DE)
(74) Representative: Pfenning, Meinig & Partner mbB

(57) **Abstract**

For generating a random pattern with a nonvolatile memory device, the nonvolatile memory device is configured to store a bit 0 value if the device resistance is below a first threshold in a low resistance state, LRS, and store a bit 1 value if the device resistance is above a second threshold in a high resistance state, HRS, wherein the second threshold is above the first threshold. Then, cycling the nonvolatile memory device between the LRS and the HRS in a plurality of cycles by iteratively performing SET, RESET and READ operations provides for generating a random pattern by summing up values of the device resistance read in all the cycles where the SET and RESET operations are successful. Provided are stable and distinguished states in nonvolative memory devices with generation of random patterns that enable robustness of electronic devices against cyber-attacks at both hardware and software level.

## Description

### TECHNICAL FIELD

The present disclosure relates generally to the field of memory technology and, more specifically, to a method of generating a random pattern with a nonvolatile memory device, an array of nonvolatile memory devices, and an array of One Transistor One Resistor, 1T1R, memory devices. Furthermore, the present disclosure relates to an identification apparatus configured for implementing said methods of generating random patterns.

### BACKGROUND

Typically, due to advancements in the field of electronics, a large amount of data is shared among and stored on electronic devices and systems, such as smartphones, tablets, cloud services, wireless communication devices, and the like. Due to the large amount of data transfer and storage, a security of the data is of prime importance to maintain privacy and confidentiality. Further, there is a necessity to provide for an improved security of the data at both hardware and software level while maintaining the performance and cost-efficiency of the electronic devices and systems unaffected. In order to secure the data from being stolen or misinterpreted, a variety of data protection or encryption methods and techniques, such as a security patch, a true random number generator, TRNG, or a physical unclonable function, PUF, are developed and used. The TRNG is commonly used to generate secret keys, initialization vectors, and other cryptographic parameters for data encryption. However, the current data encryption methods are unable to eliminate data tampering without trusted and authenticated electronic devices and are not reliable and secure enough to provide improved data security.

Currently, certain attempts have been made to solve the problem of tampering or security of the data stored on and transferred between the electronic systems and devices. One of such attempts involves use of systems on chip, SoCs, in electronic devices with integration of security specific subsystems, such as a random key generation subsystem (often called entropy generation), cryptographic primitives for encryption and hashing, and protections against cyber-attacks. However, the problem associated with such attempts is that running algorithms used in such subsystems for implementing sybersecurity measure and protecting the data induces a significant latency and energy penalty in the electronic devices. Further, such attempts are unable to achieve security at both hardware and software level and are often not compatible with electronic devices developed by different manufacturers. Moreover, such attempts are not effective in case of new applications, such as internet of things, IOT, neuromorphic, and computing. Thus, there exists a technical problem of how to develop a security system, which is robust against cyber-attacks at both hardware and software level without latency and energy penalty with the electronic devices.

Therefore, in light of the foregoing discussion, there exists a need to overcome the aforementioned drawbacks associated with conventional cybersecurity systems.

### SUMMARY

The present disclosure provides a method of generating a random pattern with a nonvolatile memory device, a method of generating a random pattern with an array of nonvolatile memory devices, and a method of generating a random pattern with an array of One Transistor One Resistor, 1T1R, memory devices. Moreover, the present disclosure provides an identification apparatus configured for implementing the method of generating the random pattern. The present disclosure provides a solution to the existing problem of how to develop a security system which is robust against cyber-attacks at both hardware and software level without latency and energy penalty with the electronic devices. An aim of the present disclosure is to provide a solution that overcomes at least partially the problems encountered in the prior art and provides an improved security via effective generating of a multiplicity of random patterns that can be used, for example, for sybersecurity measures, with the use of nonvolatile memory devices, even a single nonvolatile memory device.

One or more objectives of the present disclosure are achieved by the solutions provided in the enclosed independent claims. Advantageous implementations of the present disclosure are further defined in the dependent claims.

In one aspect, the present disclosure provides a method of generating a random pattern with a nonvolatile memory device. The method comprises configuring a nonvolatile memory device to store a bit 0 value if a device resistance is below a first threshold in a Low-Resistance state, LRS, when a positive bias of voltage is applied to a top electrode and a ground signal is applied to a bottom electrode of the nonvolatile memory device, store a bit 1 value if the device resistance is above a second threshold in a High-Resistance State, HRS, when the positive bias of voltage is applied to the bottom electrode and the ground signal is applied to the top electrode, and provide for reading a value of the device resistance in response to a low bias of voltage. Moreover, the low bias of voltage is three or more times below the positive bias of voltage applied to put the nonvolatile memory device into the LRS and the HRS, and the second threshold is above the first threshold. Further, the method comprises cycling the nonvolatile memory device between the states in a plurality of cycles. In addition, each cycle comprises iteratively performing a SET operation to put the nonvolatile memory device into the LRS and a READ operation to read a value of the device resistance, until the SET operation is successful when the read value is below the first threshold, or unsuccessful when an end of cycle condition is met. The method further comprises iteratively performing a RESET operation to put the nonvolatile memory device into the HRS and a READ operation to read a value of the device resistance, until the RESET operation is successful when the read value is above the second threshold, or unsuccessful when the end of cycle condition is met. Furthermore, the method comprises generating a random pattern by summing up the values of the device resistance read in all the cycles where the SET and RESET operations are successful.

The method implements a memory programming scheme, which involves utilizing stochastic behaviour of the nonvolatile memory device during its cycling between states with SET/RESET operations as a proof of concept to generate random patterns not linked to previous state or sequence, which is beneficial to provide a robust protection mechanism against cyberattacks at both hardware and software level. Further, the memory programming scheme implemented in the method is beneficial to eliminate latency and energy penalty associated with conventional security mechanisms. Further, due to use of the nonvolative memory stochastic behaviour, the method enables electronic systems and devices that include nonvolatile memory devices to implement effective sybersecurity measures without any external security circuitry. Furthermore, the method discloses the first threshold in the LRS state and the second threshold in the HRS state and the second threshold is maintained above the first threshold. The difference between the first threshold and the second threshold is beneficial to maintain a stable and distinct ON/OFF states in the nonvolatile memory device and it also ensures the use of only proper operating nonvolatile memory devices for generating random patterns, i.e. the method filters automatically any non-switching and bad behavior memory devices who do not follow the thresholds of the ON/OFF states. The method is compatible with security applications such as barcode, human verification code, or security key and offers a low power and economic solution with improved features at both software and hardware level. The method does not involve any external circuitry to generate random patterns, which makes the method compatible with all nonvolatile memory devices manufactured by different manufacturers.

In an implementation form, the first threshold is defined as a 50% of a cumulative distribution function, CDF, of a device resistance obtained by measuring the device resistance of a plurality of nonvolatile memory devices in the LRS, and the second threshold is defined as a 50% of a CDF of a device resistance obtained by measuring the device resistance of a plurality of nonvolatile memory devices in the HRS. This implementation form provides for stable and distinct states of the nonvolatile memory device.

In an implementation, the nonvolatile memory device comprises a 1T1R memory device, wherein the 1T1R memory device is in the LRS when the positive bias of voltage is applied to the top electrode, the ground signal is applied to the bottom electrode and a first voltage is applied to a gate of the 1T1R memory device, and the 1T1R memory device is in the HRS when the positive bias of voltage is applied to the bottom electrode, the ground signal is applied to the top electrode and a second voltage is applied to the gate, wherein the second voltage is above the first voltage.

In an implementation form, the end of cycle condition is met when a pre-defined number of iterations is reached, wherein the pre-defined number of iterations depends on a memory technology of the nonvolatile memory device, and the nonvolatile memory device comprises one of a Resistive Random-Access Memory, RRAM, a Phase-Change Memory, PCM, a Magnetoresistive Random-Access Memory, MRAM, and a Ferroelectric Random-Access Memory, FeRAM.

Further or in another implementation form, the cycling of the nonvolatile memory device between states comprises up to 1 million cycles.

In yet another implementation form, the method further comprises configuring one or more second nonvolatile memory devices of the same type as the nonvolatile memory device to store a bit 0 value if the device resistance is below the first threshold in the LRS and a bit 1 value if the device resistance is above the second threshold in the HRS, and to provide for reading a value of the device resistance in response to a low bias of voltage. Furthermore, the method comprises cycling each of the one or more second nonvolatile memory devices between the states in a plurality of cycles. Moreover, each cycle comprises iteratively performing a SET operation to put the second nonvolatile memory device into the LRS and a READ operation to read a value of the device resistance, until the SET operation is successful when the read value is below the first threshold, or unsuccessful when the end of cycle condition is met. Furthermore, the method comprises iteratively performing a RESET operation to put the second nonvolatile memory device into the HRS and a READ operation to read a value of the device resistance, until the RESET operation is successful when the read value is above the second threshold, or unsuccessful when the end of cycle condition is met. In addition, the method comprises generating one or more second random patterns by summing up the values of the device resistance read in all the cycles where the SET and RESET operations are successful. In this implementation form, the method provides for generating a multiplicity of random patterns.

In another aspect, the present disclosure provides a method of generating a random pattern with an array of nonvolatile memory devices. Moreover, the top electrodes of the nonvolatile memory devices in the array are connected to one of M word lines and bottom electrodes of the nonvolatile memory devices in the array are connected to one of N bit lines of the array. The method comprises configuring each nonvolatile memory device of the array to store a bit 0 value if the device resistance is below a first threshold in a Low-Resistance State, LRS, when a positive bias of voltage is applied to a top electrode and a ground signal is applied to a bottom electrode of the nonvolatile memory device. Further, the method comprises configuring each nonvolatile memory device of the array to store a bit 1 value if the device resistance is above a second threshold in a High-Resistance State, HRS, when the positive bias of voltage is applied to the bottom electrode and the ground signal is applied to the top electrode and provide for reading a value of the device resistance in response to a low bias of voltage. At that, the low bias of voltage is three or more times below the positive bias of voltage applied to put the nonvolatile memory device into the LRS and the HRS, and the second threshold is above the first threshold. Further, the method comprises performing a SET operation for the N*M nonvolatile memory devices of the array to put them into the LRS by applying a ground signal to the bit lines and the positive bias of voltage to the word lines of the array and performing a READ operation for the N*M nonvolatile memory devices of the array to read a value of the device resistance of each nonvolatile memory device in the LRS in the array. Further, the method comprises generating a random pattern by summing up the values of the device resistance read in the array of nonvolatile memory devices.

The method provides for generating the random patterns by summing up the values of device resistances in the array of the nonvolatile memory devices instead of cycling a single nonvolatile memory device, which is beneficial to provide robust security against all types of cyber-attacks as it engages a device to device variability (instead of a cycle to cycle variability) of the device resistance being completely independent from each other. The method provides for multibit programming of the nonvolatile memory devices in the array to increase the efficiency of generation of random patterns. Further, the use of the cross-point array of N*M rows and columns of nonvolatile memory devices is beneficial to increase the statistics of successful operations of nonvolatile memory devices, to extend the lifetime of the nonvolatile memory devices, and maintain the randomness of patterns generated by the method for a long time, such as beyond 10 years.

In an implementation form, the first threshold is defined as a 50% of a cumulative distribution function, CDF, of a device resistance obtained by measuring the device resistance of a plurality of nonvolatile memory devices in the LRS, and the second threshold is defined as a 50% of a CDF of a device resistance obtained by measuring the device resistance of a plurality of nonvolatile memory devices in the HRS. This implementation form provides for stable and distinct states of the nonvolatile memory devices.

In another implementation form, the method further comprises performing a RESET operation for the N*M nonvolatile memory devices of the array to put them into the HRS by applying the ground signal to the word lines and the positive bias of voltage to the bit lines of the array and performing a READ operation for the N*M nonvolatile memory devices of the array to read a value of the device resistance of each nonvolatile memory device in the HRS in the array. This implementation form provides for engaging in the random pattern generation the variability of the memory devices' behaviour in the HRS, in addition to the variability of its behaviour in the LRS being initially used according to this aspect of the disclosure.

In yet another implementation form, the method further comprises repeating the performing of the SET and/or RESET operations for the N*M nonvolatile memory devices of the array to put them into the LRS and/or the HRS, the performing of the READ operations to read values of the device resistance of the N*M nonvolatile memory devices after said SET and/or RESET operations and then the generating of a random pattern a plurality of times to obtain a plurality of random patterns. This implementation form provides for engaging in the random pattern generation both the device to device variability and the cycle to cycle variability.

In yet another aspect, the present disclosure provides a method of generating a random pattern with an array of One Transistor One Resistor, 1T1R, memory devices. Moreover, each memory device is connected in series with a transistor in each cross of a word line and a bit line of the array, top electrodes of the memory devices in the array are connected to one of N bit lines of the array, gates of the memory devices in the array are connected to one of M word lines, and bottom electrodes of the memory devices in the array are grounded. The method comprises configuring each 1T1R memory device of the array to store a bit 0 value if the device resistance is below a first threshold in a Low-Resistance State, LRS, when a positive bias of voltage is applied to the top electrode, a first voltage is applied to the gate and a ground signal is applied to the bottom electrode of the memory device. Further, the method comprises configuring each 1T1R memory device of the array to store a bit 1 value if the device resistance is above a second threshold in a High-Resistance State, HRS, when the positive bias of voltage is applied to the bottom electrode, a second voltage is applied to the gate and the ground signal is applied to the top electrode and provide for reading a value of the device resistance in response to a low bias of voltage. At that, the second voltage is above the first voltage, the low bias of voltage is three or more times below the positive bias of voltage which is applied to put the 1T1R memory device into the LRS and the HRS, and the second threshold is above the first threshold. The method further comprises performing a SET operation for the N*M 1T1R memory devices of the array simultaneously to put them into the LRS by applying a ground signal to the bit lines and a positive bias of voltage to the word lines of the array. The method further comprises performing a READ operation for the N*M 1T1R memory devices of the array simultaneously to read a value of the device resistance of each 1T1R memory device in the LRS in the array and generating a random pattern by summing up the values of the device resistance read in the array of 1T1R memory devices.

The method provides for generating the random patterns by summing up the values of device resistances in the array of the 1T1R memory devices instead of cyclying a single nonvolatile memory device, which is beneficial to provide robust security against all types of cyber-attacks as it engages the device to device variability being completely independent from each other. The method proposes a scheme to perform parallel multibit programming and reading of the array of the 1T1R memory devices, which is beneficial to increase the efficiency of the generation of random patterns, to reduce the latency and to avoid degradation of endurance of the nonvolatile memory devices.

In an implementation form, the first threshold is defined as 50% of a cumulative distribution function, CDF, of a device resistance obtained by measuring the device resistance of a plurality of 1T1R memory devices in the LRS, and the second threshold is defined as a 50% of a CDF of a device resistance obtained by measuring the device resistance of a plurality of 1T1R memory devices in the HRS. This implementation form provides for stable and distinct states of the nonvolatile memory devices.

In another implementation form, the method further comprises performing a RESET operation for all the 1T1R memory devices of the array simultaneously to put them into the HRS by applying the ground signal to the word lines and the positive bias of voltage to the bit lines of the array, and performing a READ operation for all the 1T1R memory devices of the array simultaneously to read a value of the device resistance of each 1T1R memory device in the HRS in the array. This implementation form provides for engaging in the random pattern generation the variability of the memory devices' behaviour in the HRS, in addition to the variability of its behaviour in the LRS being initially used according to this aspect of the disclosure.

In yet another implementation form, the method further comprises repeating the performing of the SET and/or RESET operations for the N*M 1T1R memory devices of the array to put them into the LRS and/or the HRS, the performing of the READ operations to read values of the device resistance of the N*M 1T1R memory devices after said SET and/or RESET operations and then the generating of a random pattern a plurality of times to obtain a plurality of random patterns. This implementation form provides for engaging in the random pattern generation both the device to device variability and the cycle to cycle variability.

The 1T1R configuration helps for better programming and multibit programming, which increases the efficiency of the process and the number of generated patterns.

In another aspect, the present disclosure provides an identification apparatus configured for implementing a method of generating a random pattern for providing a unique identifier using the generated random pattern.

In an implementation form, the identification apparatus is configured for operating as a physical unclonable function, PUF, and/or a security key.

The identification apparatus achieves all the advantages and technical effects of the methods of generating random patterns with nonvolatile memory devices the present disclosure.

It is to be appreciated that all the aforementioned implementation forms can be combined. It is be noted that all devices, elements, circuitry, units, and means described in the present application could be implemented in the software or hardware elements or any kind of combination thereof. All steps which are performed by the various entities described in the present application, as well as the functionalities described to be performed by the various entities, are intended to mean that the respective entity is adapted to or configured to perform the respective steps and functionalities. Even if, in the following description of specific embodiments, a specific functionality or step to be performed by external entities is not reflected in the description of a specific detailed element of that entity that performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A and 1B collectively illustrate a flowchart of a method of generating a random pattern with a nonvolatile memory device, in accordance with an embodiment of the present disclosure;
FIGs. 2A and 2B collectively illustrates a flowchart of a method of generating a random pattern with an array of nonvolatile memory devices, in accordance with an embodiment of the present disclosure;
FIGs. 3A and 3B collectively illustrates a flowchart of a method of generating a random pattern with an array of One Transistor One Resistor, 1T1R, memory devices, in accordance with an embodiment of the present disclosure;
FIG. 4 is a block diagram that depicts an identification apparatus, in accordance with an embodiment of the present disclosure;
FIG. 5 is a graphical representation that depicts two graphs of a cumulative distribution function, CDF, of a device resistance obtained with nonvolative memory devices in the LRS and the HRS correspondingly, in accordance with an embodiment of the present disclosure;
FIG. 6 is a flowchart that depicts a scheme of programming a nonvolatile memory device to fix target values for SET and RESET operations so that to have distinct low and high resistance states;
FIG. 7 is a flowchart of a method of cycling a nonvolatile memory device with RESET/SET sequences up to 1 million cycles , in accordance with an embodiment of the present disclosure;
FIG. 8 is a graphical representation that depicts a variation of voltage applied to a nonvolatile memory device during the cycling of the same with SET/RESET sequences from FIG. 7, in accordance with an embodiment of the present disclosure;
FIGs. 9A, 9B and 9C are schematic diagrams that depict a nonvolatile memory device, a 2*2 mini-array of the nonvolatile memory device and an N*M array of the nonvolatile memory devices respectively, that can be used in embodiments of the present disclosure;
FIGs 10 is graphical representation that depicts a resistance (ohm) or conductance (S) of a nonvolative memory device in low and high resistance states;
FIG. 11 is a graphical representation that depicts possible types of variability in behaviour of a nonvolatile memory device during the cycling of the same with the SET/RESET sequences that are used to generate random patterns in accordance with an embodiment of the present disclosure;
FIG. 12 is a graphical representation that depicts another possible type of variability in the behaviour of a nonvolatile memory device during the cycling of the same with the SET/RESET sequences that are used to generate random patterns in accordance with an embodiment of the present disclosure;
FIG. 13 is a schematic diagram that depicts a scheme of parallel programming and reading for an array of nonvolatile memory devices to generate random patterns, in accordance with an embodiment of the present disclosure; and
FIGs. 14A, 14B and 14C are schematic diagrams that depict a one transistor one resistor, 1T1R memory device, a 2*2 mini-array of 1T1R memory devices and an N*M array of 1T1R memory devices respectively, that can be used in embodiments of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

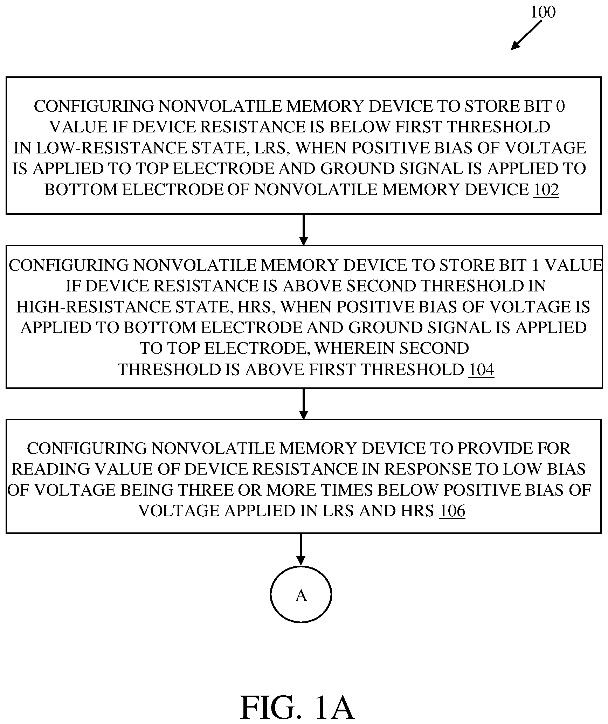

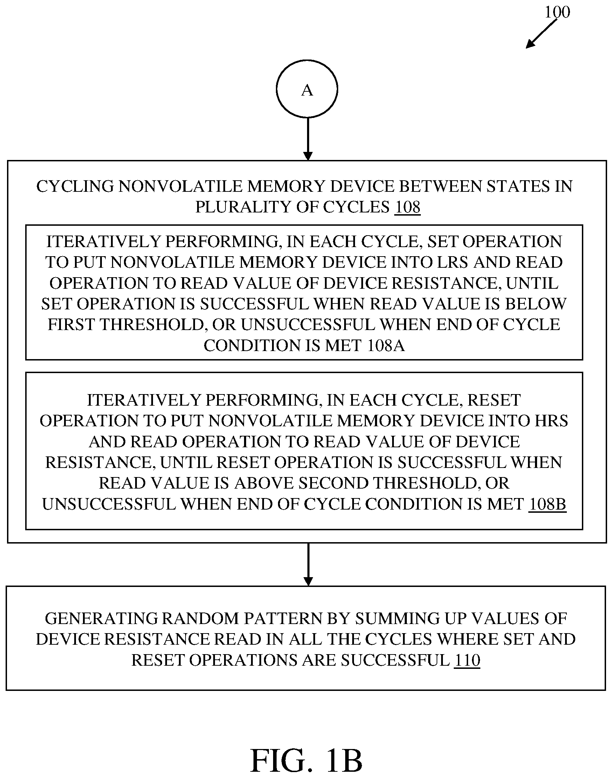

FIGs. 1A and 1B collectively illustrates a flowchart of a method of generating a random pattern with a nonvolatile memory device, in accordance with an embodiment of the present disclosure. With reference to FIGs. 1A and 1B, there is shown a method **100** of generating a random pattern with a nonvolatile memory device. The method **100** includes steps from **102** to **110.**

The method **100** is applicable for generating random patterns that can be used, for example, in sybersecurity measures, with any nonvolatile memory device in any electronic device or system. In an implementation, the nonvolatile memory device refers to a type of memory device that retains the data without the need of a continuous power supply. Further, the random pattern is a random set of numbers or characters, which can be generated by the nonvolatile memory device due to inherent randomness in physical properties, such as resistance, temperature, and the like of the nonvolatile memory device, as described below in more details. In an implementation, the nonvolatile memory device includes one of a Resistive Random-Access Memory, RRAM, a Phase-Change Memory, PCM, a Magneto Resistive Random-Access Memory, MRAM, and a Ferroelectric Random-Access Memory, FeRAM. Implementations of the method 100 take advantage of the stochastic behavior of nonvolatile memory devices during cycling between states, that leads to two effects of the nonvolatile memory devices, namely a device to device variability and a cycle to cycle variability of a device resistance. The device to device variability refers to random differences in the electrical characteristics and behaviour of individual nonvolatile memory devices, which are manufactured by the same process and technology, and under the same conditions. The cycle to cycle variability refers to random variations in the electrical characteristics of each nonvolatile memory device that occur over time, in each working cycle, when the device is SET and/or RESET.

At step **102,** the method **100** includes configuring the nonvolatile memory device to store a bit 0 value if a device resistance is below a first threshold in a Low-Resistance state, LRS, when a positive bias of voltage is applied to a top electrode and a ground signal is applied to a bottom electrode of the nonvolatile memory device. The nonvolatile memory device includes the top electrode and the bottom electrode with a dielectric disposed between the top electrode and the bottom electrode. Optionally, the positive bias of voltage is a direct current, DC or an alternating current, AC, which is provided by a DC current source or an AC current source. Furthermore, the ground signal is a reference point that is used for the measurement of the positive bias of voltage. The step **102** of the method **100** represents programming of the nonvolatile memory device to store a bit 0 value in the LRS using the first threshold as a target value of the device resistance in said state. In an implementation, the LRS refers to a state of the nonvolatile memory device in which the nonvolatile memory device exhibits low electrical resistance. In another implementation, the LRS of the nonvolatile memory device corresponds to an ON-state of the nonvolatile memory device. The first threshold refers to a target resistance value below which the nonvolatile memory device in the LRS is considered to be ON and store bit 0. In other words, the first threshold is a limiting value of the device resistance of the nonvolatile memory device, which separates the LRS from the other state of the nonvolatile memory device.

At step **104,** the method **100** includes configuring the nonvolatile memory device to store a bit 1 value if the device resistance is above a second threshold in a High-Resistance State, HRS, when the positive bias of voltage is applied to the bottom electrode and the ground signal is applied to the top electrode. At that, the second threshold is above the first threshold. The step **104** represents further programming of the nonvolatile memory device to store bit 1 value in the HRS when the device resistance of the nonvolatile memory device is above the second threshold being a target value for said state. In an implementation, the HRS refers to a state of the nonvolatile memory device in which the nonvolatile memory device exhibits high electrical resistance. In another implementation, the HRS of the nonvolatile memory device corresponds to an OFF-state of the nonvolatile memory device. The second threshold refers to a target resistance value above which the nonvolatile memory device in the HRS is considered to be OFF and store the bit 1 value. The second threshold is a limiting value of the device resistance of the nonvolatile memory device, which separates the HRS from the other state of the nonvolatile memory device. By maintaining a gap between the first threshold and the second threshold, the method **100** is beneficial to maintain stable and distinguished states of the nonvolatile memory device which allows filtering out non-working memory devices during the random pattern generation.

At step **106,** the method **100** includes configuring the nonvolatile memory device to provide for reading a value of the device resistance in response to a low bias of voltage. At that, the low bias of voltage is three or more times below the positive bias of voltage applied to put the nonvolatile memory device into the LRS and the HRS. In an implementation, the magnitude of the low bias of voltage is significantly below the positive bias of voltage, which is applied to switch the nonvolatile memory device into the LRS and the HRS. In an example, the low bias of voltage refers to a DC voltage or an AC voltage in a range of 0. 1V to 0.3V, while the positive bias of voltage is about 1.0V or 0.9V. The difference between the positive bias of voltage and the low bias of voltage is that the positive bias of voltage is applied to implement SET or RESET operations in the nonvolatile memory device putting it into the HRS or LRS and the low bias of voltage is used to read the device resistance of the nonvolatile memory device (and thereby read a bit value currently stored by the device) without changing the current state of the nonvolatile memory device. In an example, the device resistance is read by a resistance measuring instrument. Examples of the resistance measuring instrument may include, but are not limited to, digital multimeter, ohmmeter, Wheatstone bridge, Kelvin bridge, and the like. The step **106** completes the programming of the nonvolatile memory device.

At step **108,** the method **100** includes cycling the nonvolatile memory device between the states in a plurality of cycles. In an implementation, the plurality of cycles can be performed up to an endurance failure of the nonvolatile memory device. In an implementation, the endurance failure of the nonvolatile memory device refers to a measure indicating number of times that the nonvolatile memory device can perform a write/erase cycle before failure. In accordance with an embodiment, the cycling of the nonvolatile memory device between states includes up to 1 million cycles. The number of cycles depends on a memory technology, that is physical characteristics of the nonvolatile memory device. For example, the number of cycles for the RRAM is different than that for the PCM. In an implementation, the endurance failure of the nonvolatile memory device depends on material properties of the nonvolatile memory device and the programming parameters selected to program the nonvolatile memory device. The step **108** further includes sub-steps **108A** and **108B.**

At sub-step **108A,** the method **100** includes iteratively performing, in each cycle, a SET operation to put the nonvolatile memory device into the LRS and a READ operation to read a value of the device resistance, until the SET operation is successful when the read value is below the first threshold, or unsuccessful when an end of cycle condition is met. In an implementation, the SET operation includes setting the nonvolatile memory device into the LRS by applying the positive bias of voltage to the top electrode and the ground signal to the bottom electrode of the nonvolatile memory device. Every time the SET operation is performed, the value of the device resistance of the nonvolatile memory device is read during the READ operation until the success or the end of cycle condition is met. The application of the positive bias of voltage to the top electrode of the nonvolatile memory device and the ground signal to the bottom electrode creates an electrical field across the nonvolatile memory device and causes electric current to flow through the nonvolatile memory device, then the resistance to the flow of electric current is measured during the READ operation. In one option, the SET operation is performed until the operation is successful, i.e. the value of the device resistance is below the first threshold. Alternatively, the SET operation is performed until the end of cycle condition is met, e.g. when a pre-defined number of iterations is reached, such as the pre-defined number of iterations that depends on the memory technology of the nonvolatile memory device. In an implementation, the predefined number of iterations depends on the physical characteristics and manufacturing process implemented during the manufacturing of the nonvolatile memory device. Therefore, the predefined number of iterations is different for different nonvolatile memory devices. In other cases, the predefined number of iterations is set to achieve faster or more effective cycling of the nonvolatile memory device. As stated above, the step **108** includes cycling the nonvolatile memory device between the states in a plurality of cycles, i.e. between the LRS and the HRS, so, the iteratively repeated operations of the sub-step **108A,** that can be referred to as a SET sequence, constitute a half of the cycling procedure of the step **108.** In other words, the SET sequence of the sub-step **108A** includes iterative switching the nonvolatile memory device into the LRS and measuring the corresponding device resistance until the first threshold or until the end of cycle condition is met.

At sub-step **108B,** the method **100** includes iteratively performing, in each cycle, a RESET operation to put the nonvolatile memory device into the HRS and a READ operation to read a value of the device resistance, until the RESET operation is successful when the read value is above the second threshold, or unsuccessful when the end of cycle condition is met. The performing of the RESET operation includes applying the positive bias voltage to the bottom electrode and the ground signal to the top electrode of the nonvolatile memory device. Every time the RESET operation is performed, the value of the device resistance of the nonvolatile memory device is read during the READ operation. In one option, the RESET operation is performed until the operation is successful when the value of the device resistance is above the second threshold. Alternatively, the RESET operation is performed until the end of cycle condition is met, e.g. when the pre-defined number of iterations is reached that depends on the memory technology of the nonvolatile memory device The iteratively repeated operations of the sub-step **108B** constitute remaining half of the cycling procedure of the step **108.** In an implementation, the bit 0 value is defined when the positive bias of voltage is enough to make the transition of the nonvolatile memory device from an initial state to the LRSbelow the first threshold through the SET operation and the bit 1 value is defined when the positive bias of voltage is enough to make the transition of the nonvolatile memory device from an initial state to the HRS above the second threshold through the RESET operation.

At step **110,** the method **100** includes generating a random pattern by summing up the values of the device resistance read in all the cycles where the SET and RESET operations are successful. In an implementation, the random pattern refers to a sequence of data values that are generated in a random and unpredictable way, with no discernible pattern or order. The random pattern is generated by summing the values of the device resistance that has gone through the plurality of cycles as described above. At that, the randomness of the pattern is provided by the cycle to cycle variability of the nonvolatile memory device. The generation of random patterns as per the method **100** provides a high level of randomness and unpredictability, which is important in applications where security, privacy, or fairness is essential.

In accordance with an embodiment, the first threshold is defined as a 50% of a cumulative distribution function, CDF, of the device resistance that is obtained by measuring the device resistance of a plurality of nonvolatile memory devices in the LRS. Moreover, the second threshold is defined as a 50% of the CDF of the device resistance that is obtained by measuring the device resistance of a plurality of nonvolatile memory devices in the HRS. The CDF refers to a probability distribution function which in the context of the given disclosure depicts a probability of occurrence of a particular value of the device resistance of the nonvolatile memory device, such as that is equal to or less than the first threshold, or that is equal to or greater than the second threshold. In an example, the SET operation and the RESET operation are performed on the plurality of nonvolatile memory devices in the LRS and the HRS respectively and corresponding read values of the device resistances are measured to collect the statistics. Further, the CDF values are calculated for both the LRS and the HRS statistics and two CDFs are plotted to define the first and the second thresholds.

In accordance with an embodiment, the nonvolatile memory device includes a one transistor one resistor, 1T1R, memory device. In an implementation, the 1T1R memory device is a random-access memory cell device in which a transistor acts as a switch to control a flow of electric current through a resistor. The 1T1R memory device includes a top electrode, a bottom electrode, and a dielectric material disposed between the top electrode and the bottom electrode. Further, the transistor is connected to the bottom electrode of the 1T1R memory device. Moreover, the 1T1R memory device is in the LRS when the positive bias of voltage is applied to the top electrode, the ground signal is applied to the bottom electrode, and a first voltage is applied to a gate of the 1T1R memory device. In an implementation, the first voltage is a direct current, DC, voltage supplied to the gate of the 1T1R memory device through a direct current, DC, power supply. Due to the programming described above, in the LRS, the device resistance of the 1T1R memory device is below the first threshold. Furthermore, the 1T1R memory device is in the HRS when the positive bias of voltage is applied to the bottom electrode, and the ground signal is applied to the top electrode and a second voltage is applied to the gate. Moreover, the second voltage exceeds the first voltage. In an implementation, the second voltage is a direct current, DC voltage supplied to the gate of the 1T1R memory device through a direct current, DC power supply. Due to the programming described above, in the HRS, the device resistance of the 1T1R memory device is above the second threshold. Thereby the method **100** is also applicable to use stochastic behaviour of the 1T1R memory device to generate random patterns.

In accordance with an embodiment, the method **100** further includes configuring one or more second nonvolatile memory devices of the same type as the nonvolatile memory device to store a bit 0 value if the device resistance is below the first threshold in the LRS, to store a bit 1 value if the device resistance is above the second threshold in the HRS, and to provide for reading a value of the device resistance in response to the low bias of voltage. In other words, the one or more second nonvolatile memory devices are programmed in the same way as the nonvolatile memory device at the steps **102-106** of FIG. 1. In an implementation, the one or more second nonvolatile memory devices include a plurality of nonvolatile memory devices, which for example are connected with each other in a parallel configuration so that SET/RESET and READ operations can be performed in parallel. In operation, when the low bias voltage is applied to electrodes of each of the one or more second nonvolatile memory devices and corresponding device resistance values are read and compared with the first threshold. Moreover, if the device resistance value is lower than the first threshold in the LRS, then the one or more second nonvolatile memory devices store the bit 0 value (i.e., are in the ON state). In addition, if the device resistance value is above than the second threshold in the HRS, then the one or more second nonvolatile memory devices store the bit 1 value (i.e., are in the OFF state). Moreover, the method **100** in this embodiment further includes cycling each of the one or more second nonvolatile memory devices between the states in a plurality of cycles. In each cycle of each second nonvolatile memory device, the method includes a SET sequence consisting of iteratively performing the SET operation to put the second nonvolatile memory device into the LRS and the READ operation to read a value of the device resistance, until the SET operation is successful when the read value is below the first threshold, or unsuccessful when the end of cycle condition is met. Moreover, each cycle of each second nonvolatile memory device then includes a RESET sequence consisting of iteratively performing a RESET operation to put the second nonvolatile memory device into the HRS and a READ operation to read a value of the device resistance, until the RESET operation is successful when the read value is above the second threshold, or unsuccessful when the end of cycle condition is met. The one or more second nonvolatile memory devices are considered to be in the LRS when the positive bias of voltage is applied to the top electrode and the ground signal is applied to the bottom electrode of the second nonvolatile memory device and considered to be in the HRS when the positive bias of voltage is applied to the bottom electrode and the ground signal is applied to the top electrode of the second nonvolatile memory device. The end of cycle condition refers to a pre-defined number of iterations in the SET sequence or the RESET sequence to try achieving a success in switching the nonvolatile memory device into a desired state before the nonvolatile memory device is considered as non-working one (e.g. when the device is failed). Furthermore, the method **100** includes generating one or more second random patterns by summing up the values of the device resistance read in the plurality of cycles of the endurance checking of the one or more second nonvolatile memory devices. In other words, the random pattern generation in this embodiment on the basis of the sum of the values of the device resistance read in the one or more second nonvolatile memory devices in the plurality of cycles benefits from the device to device variability of the devices' resistance, in addition to the cycle to cycle variability which effect is mainly employed in the steps **102-110** of the method **100** with the single nonvolatile memory device. The second random patterns can be used for creating cryptographic keys and implementing other sybersecurity measures in electronic devices and systems.

The method **100** is thereby based on the stochastic behaviour of the nonvolative memory devices that is used to generate random patterns not linked to previous state or sequence, which is beneficial to provide cryptographic keys and implement a robust protection mechanism against cyber-attacks at both hardware and software level. Further, the method **100** is beneficial to eliminate latency and energy penalty associated with conventional security mechanisms since only cycling of one or more nonvolatile memory devices is required for the random pattern generation without need of any external circuitry. Further, the method **100** discloses setting the first threshold in the LRS and the second threshold in the HRS, wherein the second threshold is above the first threshold. The set difference between the first threshold and the second threshold is beneficial to maintain stable and distinct states of nonvolatile memory devices. The method **100** is compatible with security applications, such as barcode, human verification code, or security key and offers a low power and economic solution with improved features at both software and hardware level. The method **100** does not involve any external circuitry to generate random patterns, which makes the method compatible with all nonvolatile memory devices manufactured by different manufacturers. The method **100** also provides for automatic filtering out non-working and bad behaviour nonvolatile memory devices, which don not follow the set thresholds of ON/OFF states, from the generation process.

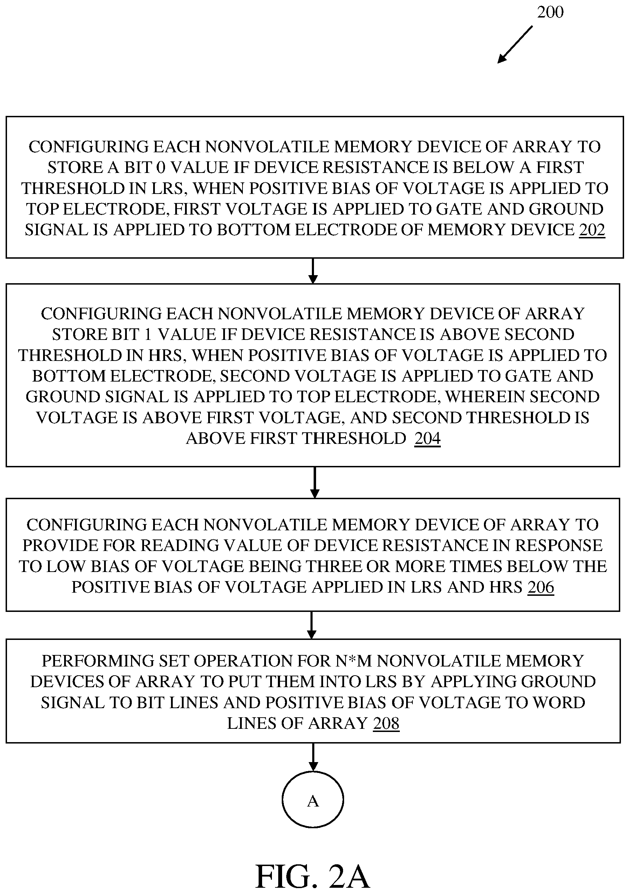

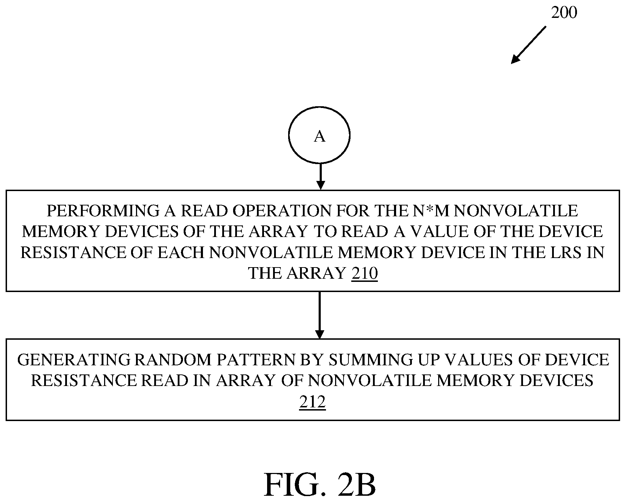

FIGs. 2A and 2B collectively illustrates a flowchart of a method of generating a random pattern with an array of nonvolatile memory devices, in accordance with an embodiment of another aspect of the present disclosure. With reference to FIGs. 2A and 2B, there is shown a flowchart of a method **200** of generating a random pattern with an array of nonvolatile memory devices. The method **200** includes steps from **202** to **212.**

The array of nonvolatile memory devices refers to a plurality of nonvolatile memory devices connected with each other in a parallel configuration. Each of the nonvolatile memory device includes a top electrode, a bottom electrode, and a dielectric material disposed between the top electrode and the bottom electrode. Moreover, top electrodes of each of the nonvolatile memory devices in the array are connected to one of M word lines and bottom electrodes of each of the nonvolatile memory devices in the array are connected to one of N bit lines of the array. As a result, the plurality of nonvolatile memory devices are connected in the form of rows and columns. Furthermore, the M word lines refer to control lines, which are used to select a row of nonvolatile memory devices in the array of nonvolatile memory devices. When a specific nonvolatile memory device is to be read from or written to, the word line corresponding to that row is activated to allow the data from the corresponding nonvolatile memory device to be accessed. In another implementation, the N word lines refer to signal lines, which are used to read or write the data stored in a column of nonvolatile memory devices in the array of nonvolatile memory devices. When a specific nonvolatile memory device is to be accessed, a corresponding bit line is activated to allow the data (a bit value) from the specific nonvolatile memory device to be read out or new data to be written to the specific nonvolatile memory device. The letters 'M' and 'N' are positive integers, which represent the number of rows and the number of columns in the array of the nonvolatile memory devices.

At step **202,** the method **200** includes configuring each nonvolatile memory device of the array to store a bit 0 value if the device resistance is below a first threshold in a Low-Resistance State, LRS, when a positive bias of voltage is applied to a top electrode and a ground signal is applied to a bottom electrode of the nonvolatile memory device. In an example, the top electrodes of all the nonvolatile memory devices in the array are supplied with the positive bias of voltage through M word lines and the bottom electrodes of all the nonvolatile memory devices in the array are supplied with the ground signal through N bit lines. The step **202** of the method **200** is similar to the step **102** of the method **100** but relates to the array of nonvolatile memory devices. As per the programming of the step **202,** when a nonvolatile memory device of the array is in the LRS, after application of the positive bias of the voltage and the ground signal, the value of the device resistance is to be below the first threshold to be considered as storing the bit 0 value.

At step **204,** the method **200** includes configuring each nonvolatile memory device of the array to store a bit 1 value if the device resistance is above a second threshold in a High-Resistance State, HRS, when the positive bias of voltage is applied to the bottom electrode and the ground signal is applied to the top electrode. At that, the second threshold is above the first threshold. In an example, the bottom electrodes of all the nonvolatile memory devices in the array are supplied with the positive bias of voltage through N bit lines and the top electrodes of all the nonvolatile memory devices in the array are supplied with the ground signal through M word lines. The step **204** of the method **200** is similar to the step **104** of the method **100** but relates to the array of nonvolatile memory devices. As per the programming of the step **204,** when a nonvolatile memory device of the array is in the HRS, the value of the device resistance is to be above the second threshold to be considered as storing the bit 1 value.

At step **206,** the method **200** includes configuring each nonvolatile memory device of the array to provide for reading a value of the device resistance in response to a low bias of voltage. Moreover, the low bias of voltage is three or more times below the positive bias of voltage applied to put the nonvolatile memory device into the LRS and the HRS. The step **206** of the method **200** is similar to the step **106** of the method **100** but relates to the array of nonvolatile memory devices. The low bias of voltage is applied to the array to provide for the reading of the values of the device resistances. In an implementation, the bit 0 value and the bit 1 value represent two distinguished states (ON and OFF states) of each nonvolatile device of the array of the nonvolatile memory devices. Moreover, as detailed above the first threshold is above the second threshold to maintain distinguished ON/OFF states of the nonvolatile memory devices.

At step **208,** the method **200** includes performing a SET operation for the N*M nonvolatile memory devices of the array to put them into the LRS by applying a ground signal to the bit lines and the positive bias of voltage to the word lines of the array. The N*M nonvolatile memory devices include N bit lines and M word lines. In an example, the positive bias of voltage is provided through a direct current, DC, power source or an alternating current, AC, power source. Moreover, the ground signal is applied to measure the voltage that is applied to the word lines of the array.

At step **210,** the method **200** includes performing a READ operation for the N*M nonvolatile memory devices of the array to read a value of the device resistance of each nonvolatile memory device in the LRS in the array. In an implementation, the value of the device resistance is measured through a resistance measuring instrument, such as multimeter or ohmmeter after application of the low bias of voltage and the ground signal.

At step **212,** the method **200** includes generating a random pattern by summing up the values of the device resistance read in the array of nonvolatile memory devices. In other words, the generated random pattern is a combination of the device resistance values of each nonvolatile memory device from the array of nonvolatile memory devices. The random pattern generation in the method **200** is based on the device to device variability among the plurality of nonvolatile memory devices of the array, instead of the cycle to cycle variability of a single nonvolatile memory device resistance that is used in the method **100** of FIGs. 1A and 1B.

In an embodiment, the the first threshold is defined as a 50% of a cumulative distribution function, CDF, of a device resistance obtained by measuring the device resistance of a plurality of nonvolatile memory devices in the LRS, and the second threshold is defined as a 50% of a CDF of a device resistance obtained by measuring the device resistance of a plurality of nonvolatile memory devices in the HRS. In other words, the first and second thresholds for the method **200** are defined in the same way as in the method **100.**

In accordance with an embodiment, the method **200** further includes performing a RESET operation for the N*M nonvolatile memory devices of the array to put them into the HRS by applying the ground signal to the word lines and the positive bias of voltage to the bit lines of the array, and performing a READ operation for the N*M nonvolatile memory devices of the array to read a value of the device resistance of each nonvolatile memory device in the HRS in the array. This embodiment extends the method **200** on the use of the second state of the nonvolatile memory devices in the array for the random pattern generation.

In accordance with an embodiment, the method **200** further includes repeating the performing of the SET and/or RESET operations for the N*M nonvolatile memory devices of the array to put them into the LRS and/or the HRS, the performing of the READ operations to read values of the device resistance of the N*M nonvolatile memory devices after said SET and/or RESET operations and then the generating of a random pattern a plurality of times to obtain a plurality of random patterns. This embodiment provides for repeating the steps with SET and RESET sequences of the method **200,** after the programming of the array of the nonvolatile memory devices, a plurality of times to combine the effects of the device to device variability with the effects of the cycle to cycle variability. At that, several alternatives of the repeating are available. In an implementation, the method **200** includes repeating the performing of the SET and RESET operations for the N*M nonvolatile memory devices of the array to put them into the LRS and the HRS, the performing of the READ operations to read values of the device resistance of the N*M nonvolatile memory devices each time after each of said SET and RESET operations and then the generating of the random pattern a plurality of times to obtain a plurality of random patterns. In another implementation, the method **200** includes repeating the performing of the SET operation for the N*M nonvolatile memory devices of the array to put them into the LRS, the performing of the READ operations to read values of the device resistance of the N*M nonvolatile memory devices each time after said SET operation and then the generating of the random pattern a plurality of times to obtain a plurality of random patterns. In yet another implementation, the method **200** includes repeating the performing of the RESET operation for the N*M nonvolatile memory devices of the array to put them into the HRS, the performing of the READ operations to read values of the device resistance of the N*M nonvolatile memory devices each time after said RESET operation and then the generating of the random pattern a plurality of times to obtain a plurality of random patterns. In such embodiment, the sequences of SET and/or RESET operations are repeated, and device resistance values obtained in each sequence are converted into the plurality of random patterns, which can act as cryptographic keys or security codes to protect any information stored in or transferred from an electornic device or system as well as to implement other sybersecurity measures.

The method **200** provides for generating random patterns by summing up the values of device resistances read in the array of the nonvolatile memory devices instead of using only the cycle to cycle variability of a single nonvolatile memory device, which is beneficial to enable longer lifetime of the nonvolatile memory devices. The method **200** provides for performing parallel programming and reading of the array of the nonvolatile memory devices that is beneficial to increase the efficiency and decrease the latency of the generation of random patterns, which is advantageous to provide robust security against all types of cyber-attacks. Further, the cross-point array of N*M rows and columns is beneficial to increase the statistics of successfully working nonvolatile memory devices, to extend the lifetime of the nonvolatile memory devices and maintain the randomness of the pattern generation for a long time, such as beyond 10 years.

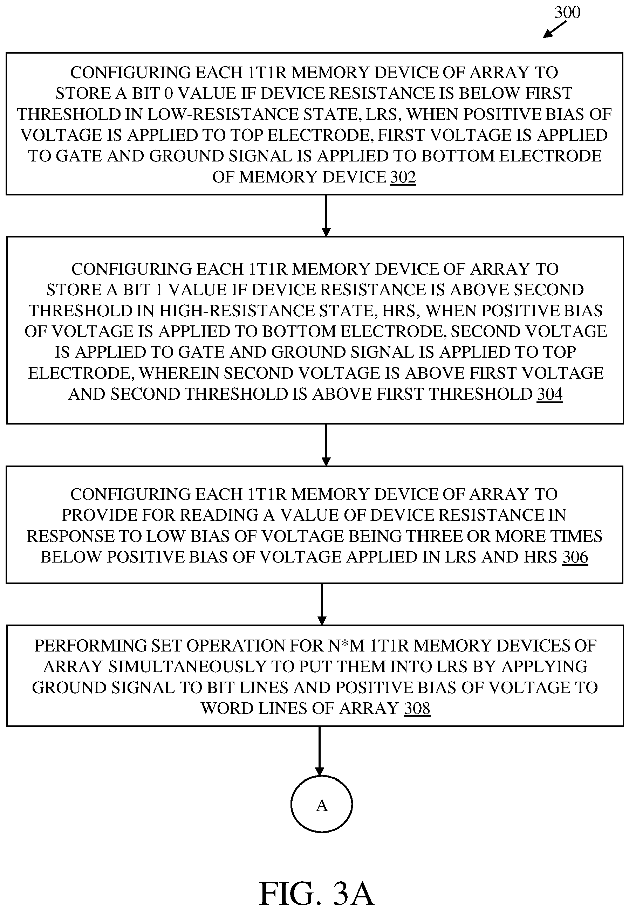

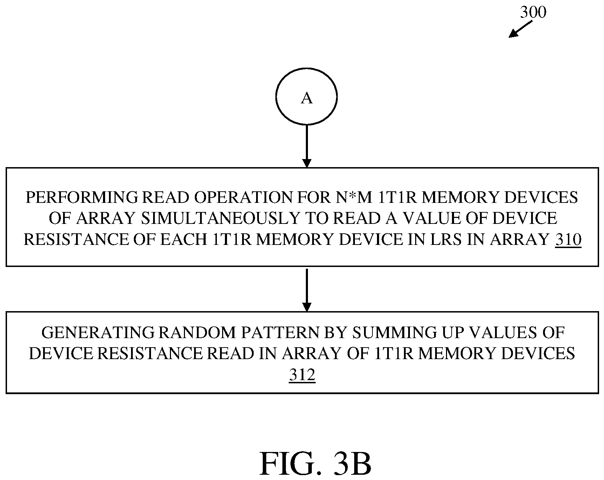

FIGs. 3A and 3B collectively illustrates a flowchart of a method of generating a random pattern with an array of One Transistor One Resistor, 1T1R, memory devices, in accordance with an embodiment of yet another aspect of the present disclosure. With reference to FIGs. 3A and 3B, there is shown a flowchart of a method **300** of generating a random pattern with an array of 1T1R memory devices. The method **300** includes steps from **302** to **312.**

The array of 1T1R memory devices includes a plurality of 1T1R memory devices connected in a parallel configuration. Further, each memory device in the array is connected in series with a transistor in each cross of a word line and a bit line of the array. Moreover, top electrodes of the memory devices in the array are connected to one of N bit lines of the array, gates of the memory devices in the array are connected to one of M word lines, and bottom electrodes of the memory devices in the array are grounded. In an implementation the array of 1T1R memory devices is a crosspoint array. The cross-point array includes a grid of the memory devices arranged at the intersections of a set of horizontal conductors, that is word lines, and a set of vertical conductors, that is bit lines. Each cross point of the word lines and the bit lines in the array of 1T1R memory devices includes one transistor. Moreover, the symbol 'N' and 'M' denotes number of bit lines and word lines respectively.

At step **302,** the method **300** includes configuring each 1T1R memory device of the array to store a bit 0 value if the device resistance is below a first threshold in a Low-Resistance State, LRS, when a positive bias of voltage is applied to the top electrode, a first voltage is applied to the gate and a ground signal is applied to the bottom electrode of the memory device. The application of the positive bias of voltage, the first voltage and the ground as described induce an electric field within each 1T1R memory device from the array of 1T1R memory devices. Hereinafter, the LRS refers to a low resistance state of the 1T1R memory devices when the devices are supplied with electrical signals as described above.. In an implementation, the first threshold is determined by plotting a cumulative distribution function, CDF, of the device resistance of a plurality of memory devices in the LSR and defining a resistance value that corresponds to a 50% of the CDF as the first threshold. The step **302** of the method **300** is similar to the step **202** of the method **200** but relates to the array of 1T1R memory devices.

At the step **304,** the method **300** includes configuring each 1T1R memory device of the array to store a bit 1 value if the device resistance is above a second threshold in a High-Resistance State, HRS, when the positive bias of voltage is applied to the bottom electrode, a second voltage is applied to the gate, and the ground signal is applied to the top electrode. The HRS refers to a high resistance state of the 1T1R memory devices when the devices are supplied with electrical signals as described above. At that, the second voltage is above the first voltage, and the second threshold is above the first threshold. In an implementation, the second threshold is determined by plotting a CDF of the device resistance of a plurality of memory devices in the HSR and defining a resistance value that corresponds to a 50% of the CDF as the second threshold. The step **304** of the method **300** is similar to the step **204** of the method **200** but relates to the array of 1T1R memory devices.

At the step **306,** the method **300** includes configuring each 1T1R memory device of the array to provide for reading a value of the device resistance in response to a low bias of voltage. Moreover, the low bias of voltage is three or more times below the positive bias of voltage which is applied to put the 1T1R memory device into the LRS and the HRS. In an example, the magnitude of the low bias of voltage is in between the range 0.1V to 0.3V, while the magnitude of the positive bias of voltage is about 1.0V or 0.9V. The step **306** of the method **300** is similar to the step **206** of the method **200** but relates to the array of 1T1R memory devices.

At step **308,** the method **300** includes performing a SET operation for the N*M 1T1R memory devices of the array simultaneously to put them into the LRS by applying a ground signal to the bit lines and a positive bias of voltage to the word lines of the array.

At step **310,** the method **300** includes performing a READ operation for the N*M 1T1R memory devices of the array simultaneously to read a value of the device resistance of each 1T1R memory device in the LRS in the array.

At step **312,** the method **300** includes generating a random pattern by summing up the values of the device resistance read in the array of 1T1R memory devices. In other words, the random pattern is a sum of device resistance values obtained by application of the positive bias of voltage, the first voltage and the ground signal as described above to each of the 1T1R memory devices in the array. The random pattern generation in the method **300,** similarly with the method **200,** is based on the device to device variability among the plurality of 1T1R memory devices of the array, instead of the cycle to cycle variability of a single nonvolatile memory device resistance that is used in the method **100** of FIGs. 1A and 1B.

In accordance with an embodiment, the first threshold is defined as a 50% of a cumulative distribution function, CDF, of a device resistance obtained by measuring the device resistance of a plurality of 1T1R memory devices in the LRS, and the second threshold is defined as a 50% of a CDF of a device resistance obtained by measuring the device resistance of a plurality of 1T1R memory devices in the HRS. In an implementation, the CDF refers to a probability distribution function which in the context of the given disclosure depicts a probability of occurrence of a particular value of the device resistance of the nonvolatile memory device, such as being equal to or less than the first threshold or being equal to or greater than the second threshold. In an example, the SET and RESET operations are performed on the plurality of 1T1R memory devices in the LRS and the HRS respectively and corresponding read values of the device resistances are measured to collect the statistics. Further, two CDFs are plotted based on the LRS and the HRS statistics respectively to define the first and the second thresholds.

In accordance with an embodiment, the method **300** further includes performing a RESET operation for all the 1T1R memory devices of the array simultaneously to put them into the HRS by applying the ground signal to the word lines and the positive bias of voltage to the bit lines of the array, and performing a READ operation for all the 1T1R memory devices of the array simultaneously to read a value of the device resistance of each 1T1R memory device in the HRS in the array. In other words, this embodiment extends the method **300** on the use of the second state of the 1T1R memory devices of the array for the random pattern generation.

In accordance with an embodiment, the method **300** further includes repeating the performing of the SET and/or RESET operations for the N*M 1T1R memory devices of the array to put them into the LRS and/or the HRS, the performing of the READ operations to read values of the device resistance of the N*M 1T1R memory devices after said SET and/or RESET operations and then the generating of a random pattern a plurality of times to obtain a plurality of random patterns. This embodiment provides for repeating the steps with SET and RESET sequences of the method **300,** after the programming of the array of the 1T1R memory devices, a plurality of times to combine the effects of the device to device variability with the effects of the cycle to cycle variability. At that, several alternatives of the repeating are available similar to those described above with reference to the method **200.** The configuration of the array of N*M 1T1R memory devices is beneficial for multibit programming and reading, which increases the efficiency of the procedureof generating a plurality of random patterns, which can act as cryptographic keys or security codes to protect any information stored in or transferred from an electornic device or system as well as to implement other sybersecurity measures.

The method **300** provides for generating random patterns by summing up the values of device resistances read in the array of the 1T1R memory devices instead of using only the cycle to cycle variability of a single nonvolatile memory device, which is beneficial to enable longer lifetime of the 1T1R memory devices. The method **300** provides for performing parallel programming and reading of the array of the 1T1R memory devices, which is beneficial to increase the efficiency and decrease the latency of the generation of random patterns, which is advantageous to provide robust security against all types of cyber-attacks.

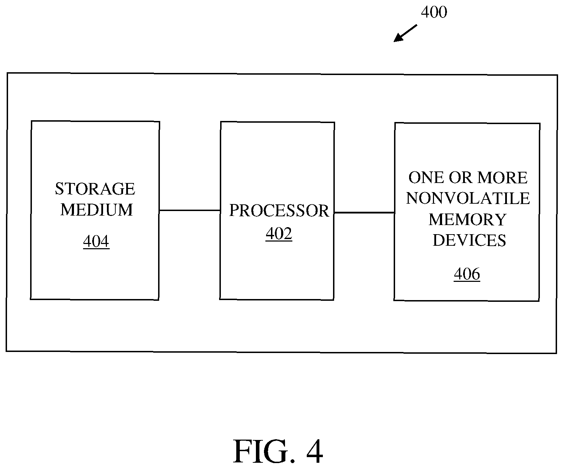

FIG. 4 is a block diagram that depicts an identification apparatus, in accordance with an embodiment of the present disclosure. With reference to FIG. 4, there is shown a block diagram that depicts an identification apparatus **400** configured for implementing a method of generating a random pattern in accordance with any implementation forms of the above-described methods **100, 200** and **300** and for providing a unique identifier using the generated random pattern. The apparatus includes a processor **402,** a storage medium **404** and one or more nonvolatile memory devices **406.**

The identification apparatus **400** is configured for implementing the method of generating a random pattern in accordance with any implementation forms of the above-described methods **100, 200** and **300** and for providing a unique identifier using the generated random pattern. The identification apparatus **400** includes the processor **402** connected with the storage medium **404** and one or more nonvolatile memory devices **406** that can be used to generate the random pattern in accordance with any of the methods **100, 200** and **300** and to provide the unique identifier using the random pattern. In an implementation, the processor **402** refers to a computational element that is operable to respond to, execute and processes instructions that drive the identification apparatus **400.** The processor **402** may refer to one or more individual processors, processing devices, and various elements associated with a processing device that may be shared by other processing devices. Additionally, the one or more individual processors, processing devices, and elements are arranged in various architectures for responding to and processing the instructions that drive the identification apparatus **400.** Examples of the processor **402** may include but are not limited to, a hardware processor, a digital signal processor (DSP), a microprocessor, a microcontroller, a complex instruction set computing (CISC) processor, an application-specific integrated circuit (ASIC) processor, a reduced instruction set (RISC) processor, a very long instruction word (VLIW) processor, a state machine, a data processing unit, a graphics processing unit (GPU), and other processors or control circuitry.

In an implementation, the storage medium **404** is configured to store the random pattern generated with the one or more nonvolatile memory devices **406** and/or the unique identifier based on the random pattern. The storage medium **404** refers to a volatile or persistent storage medium, such as an electrical circuit, magnetic disk, virtual memory, or optical disk, in which a computing apparatus can store data and/or software instructions for any duration. Optionally, the storage medium **404** is a nonvolatile mass storage, such as a physical storage media. Examples of implementation of the storage medium **404** may include but are not limited to, an Electrically Erasable Programmable Read-Only Memory (EEPROM), Dynamic Random-Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory. In the latter implementation, the one or more nonvolatile memory devices **406** can represent a part of the nonvolative storage medium **404.**

In an implementation, the identification apparatus **400** is configured for operating with a single nonvolatile memory device from the one or more nonvolatile memory devices **406.** In such implementation, the identification apparatus **400** is configured for implementing the method **100** from FIGs. 1A and 1B, for example, by means of the processor **402** executing corresponding instructions stored in the storage medium **404.** Namely, the identification apparatus **400** is configured for the following programming of the nonvolatile memory device: configuring the nonvolatile memory device to store a bit 0 value if a device resistance is below a first threshold in a Low-Resistance state, LRS, when a positive bias of voltage is applied to a top electrode, and a ground signal is applied to a bottom electrode of the nonvolatile memory device, configuring the nonvolatile memory device to store a bit 1 value if the device resistance is above a second threshold in a high-resistance state, HRS, when the positive bias of voltage is applied to the bottom electrode and the ground signal is applied to the top electrode, and configuring the nonvolatile memory device to provide for reading a value of the device resistance in response to a low bias of voltage. At that, the low bias of voltage is three or more times below the positive bias of voltage applied to put the nonvolatile memory device into the LRS and the HRS, and the second threshold is above the first threshold.

In accordance with the steps **108 (108A, 108B)** and **110** of the method **100** from FIG. 1B, the identification apparatus **400** is further configured for cycling the nonvolatile memory device between the states in a plurality of cycles. Moreover, each cycle of the said cycling includes iteratively performing a SET operation to put the nonvolatile memory device into the LRS and a READ operation to read a value of the device resistance, until the SET operation is successful when the read value is below the first threshold, or unsuccessful when an end of cycle condition is met, and iteratively performing a RESET operation to put the nonvolatile memory device into the HRS and a READ operation to read a value of the device resistance, until the RESET operation is successful when the read value is above the second threshold, or unsuccessful when the end of cycle condition is met. In addition, the identification apparatus **400** is configured to generate a random pattern by summing up the values of the device resistance read in all the cycles where the SET and RESET operations are successful.

In another implementation, the identification apparatus **400** is configured for operating with an array of nonvolatile memory devices from the one or more nonvolatile memory devices **406** to implement the method **200** from FIGs. 2A, 2B, for example, by means of the processor **402** executing corresponding instructions stored in the storage medium **404.** Moreover, the top electrodes of the nonvolatile memory devices **406** in the array are connected to one of M word lines and bottom electrodes of the nonvolatile memory devices **406** in the array are connected to one of N bit lines of the array. The identification apparatus **400** is configured for the following programming of each nonvolatile memory device of the array: configuring the nonvolatile memory device to store a bit 0 value if the device resistance is below a first threshold in a Low-Resistance State, LRS, when a positive bias of voltage is applied to a top electrode and a ground signal is applied to a bottom electrode of the nonvolatile memory device, configuring the nonvolatile memory device to store a bit 1 value if the device resistance is above a second threshold in a High-Resistance State, HRS, when the positive bias of voltage is applied to the bottom electrode and the ground signal is applied to the top electrode and configuring the nonvolatile memory device to provide for reading a value of the device resistance in response to a low bias of voltage. At that, the low bias of voltage is three or more times below the positive bias of voltage applied to put the nonvolatile memory device into the LRS and the HRS, and the second threshold is above the first threshold. In addition, the identification apparatus **400** is configured to perform a SET operation for the N*M nonvolatile memory devices of the array to put them into the LRS by applying a ground signal to the bit lines and the positive bias of voltage to the word lines of the array. Furthermore, the identification apparatus **400** is configured to perform a READ operation for the N*M nonvolatile memory devices of the array to read a value of the device resistance of each nonvolatile memory device in the LRS in the array, and to generate a random pattern by summing up the values of the device resistance read in the array of nonvolatile memory devices.

In yet another implementation, the identification apparatus **400** is configured for operating with an array of One Transistor One Resistor, 1T1R, memory devices from the one or more memory devices **406** to implement the method **300** from FIGs. 3A, 3B, for example, by means of the processor **402** executing corresponding instructions stored in the storage medium **404.** In such implementation, the identification apparatus **400** is configured for the following programming of each 1T1R memory device of the array: configuring the 1T1R memory device to store a bit 0 value if the device resistance is below a first threshold in a Low-Resistance State, LRS, when a positive bias of voltage is applied to the top electrode, a first voltage is applied to the gate, and a ground signal is applied to the bottom electrode of the memory device, configuring the 1T1R memory device to store a bit 1 value if the device resistance is above a second threshold in a High-Resistance State, HRS, when the positive bias of voltage is applied to the bottom electrode, a second voltage is applied to the gate and the ground signal is applied to the top electrode, and configuring the 1T1R memory device to provide for reading a value of the device resistance in response to a low bias of voltage. At that, the second voltage is above the first voltage, the low bias of voltage is three or more times below the positive bias of voltage which is applied to put the 1T1R memory device into the LRS and the HRS, and the second threshold is above the first threshold.

In this implementation, the identification apparatus **400** is further configured to perform a SET operation for the N*M 1T1R memory devices of the array simultaneously to put them into the LRS by applying a ground signal to the bit lines and a positive bias of voltage to the word lines of the array, to perform a READ operation for the N*M 1T1R memory devices of the array simultaneously to read a value of the device resistance of each 1T1R memory device in the LRS in the array, and to generate a random pattern by summing up the values of the device resistance read in the array of 1T1R memory devices. In an implementation, the random pattern generated by the identification apparatus **400** is transferred to a third device via communication means and/or displayed on a display module. Examples of the display module may include, but are not limited to, an LED screen, an LCD screen, a digital display, and the like. In an example, the display module is configured on a user device. Examples of the user device may include, but are not limited to a mobile device, a smartphone, a desktop computer, a laptop computer, a Chromebook, a tablet computer, a robotic device, or other user devices.

In accordance with an embodiment, the identification apparatus **400** is configured for operating as a physical unclonable function, PUF, and/or a security key. The PUF refers to a physical device or component, which produces a unique output that is difficult or impossible to replicate. In such embodiment, the identification apparatus **400** uses the random pattern to provide the unique identifier as the unique output of the PUF. The identification apparatus **400** acting as the PUF utilizes the physical randomness of nonvolatile memory devices to generate unclonable instance-specific security features and can be used as a fingerprint to identify or authenticate specific electronic devices. In an implementation, the identification apparatus **400** acting as the PUF is based on manufacturing variation, which is uncontrollable, unclonable, and unique to each individual memory device. Moreover, the configuration of the identification apparatus **400** acting as the PUF is beneficial to provide uniqueness of the generated random patterns.

The identification apparatus **400** is configured for generating random patterns using the stochasticity of the nonvolatile memory device behaviour during operation and cycling, which is efficient, low cost and requires no external circuitry as compared to conventional encryption technologies. The identification apparatus **400** provides a robust protection mechanism against cyber-attacks at both hardware and software level without latency and energy penalty associated with conventional cybersecurity mechanisms. Furthermore, the identification apparatus **400** configured for generating a random pattern in accordance with any implementation forms of the methods **100, 200** and **300** has all the benefits and provide for all the advantages of said methods that were described above.

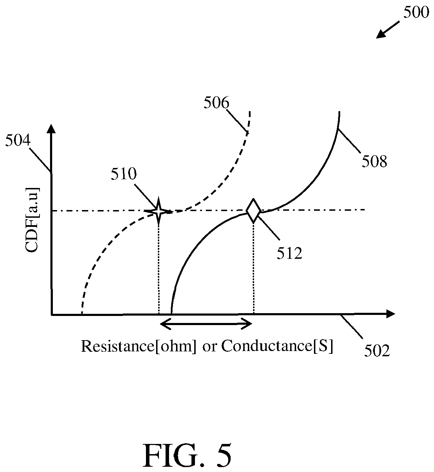

FIG. 5 is a graphical representation that depicts two graphs of a cumulative distribution function, CDF, of a device resistance obtained with nonvolatile memory devices in the LRS and the HRS correspondingly, in accordance with an embodiment of the present disclosure. With reference to FIG. 5, there is shown a graphical representation **500** that depicts an X axis **502** of a device resistance (in Ohm) or conductance (in S), a Y axis **504** of the CDF in arbitrary unit (a.u.), a first CDF graph **506** related to the LRS and a second CDF graph **508** related to the HRS.

In order to plot each of the CDF graphs **506, 508** statistics are obtained with a pluralty of nonvolatile memory devices under the set electrical conditions of the LRS and the HRS correspondingly. Namely, at first, in each of the plurality of nonvolatile memory devices the positive bias of voltage is applied to the top electrode and the ground signal is applied to the bottom electrode of the device to switch it into the LRS. In this state, a plurality of values of the device resistance/conductance are read from the plurality of nonvolatile memory devices, and the first CDF graph **506** is plotted. Further, a first threshold **510** is determined as a resistance value at a 50% level of the first CDF graph, as shown in FIG. 5. Then, in each device of the same or different plurality of nonvolatile memory devices, the positive bias of voltage is applied to the bottom electrode and the ground signal is applied to the top electrode to switch it into the HRS, and a plurality of values of the device resistance/conductance are read to plot the second CDF **508.** Further, a second threshold **512** is determined as a resistance value at a 50% level of the second CDF graph, as shown in FIG. 5.

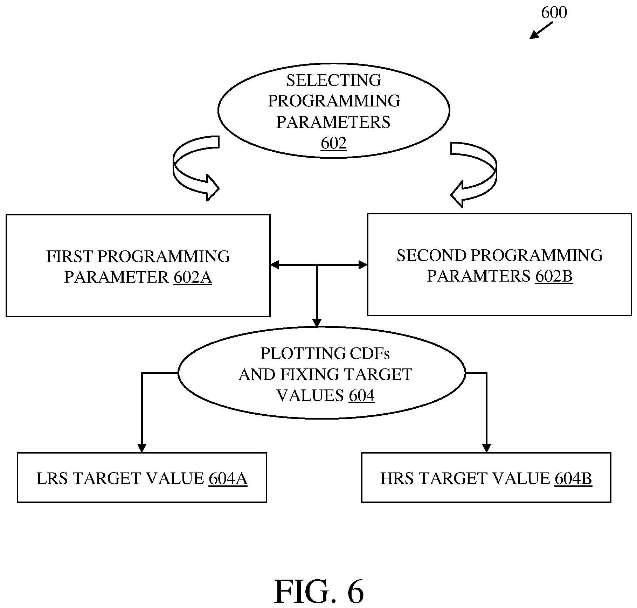

With reference to FIG. 6, there is shown a flowchart **600** of a scheme of programming a nonvolatile memory device to fix target resistance values for SET and RESET operations so that to have distinct Low Resistance State, LRS, and High Resistance State, HRS of the nonvolatile memory device, wherein the target values are the first and second thresholds **510, 512** obtained with reference to the CDF graphs from FIG. 5. The flowchart **600** includes operations **602** and **604.**

At operation **602,** a selection of programming parameters is performed for the SET and RESET operations switching the states of the nonvolatile memory device including a first programming parameters **602A** of the SET operation to switch the nonvolatile memory device into the LRS and a second programming parameters **602B** of the RESET operation to switch the nonvolatile memory device into the HRS. In different implementations the nonvolatile memory device is a one resistor, 1R, memory device or a one resistor one transistor, 1T1R memory device, and the first programming parameters **602A** include electrical parameters for the memory device of corresponding type to perform the SET operation and switch it into the LRS. In an implementation where the nonvolatile memory device is the 1R memory device, the first programming parameters **602A** include applying the positive bias voltage to the top electrode, and the ground signal to the bottom electrode of the 1R memory device, as well as a magnitude of the the positive bias voltage such as 1.0V or 0.9V. Further, in an implementation where the nonvolatile memory device is the 1T1R memory device, the first programming parameters **602A** include applying the positive bias of voltage to the bottom electrode, the first voltage to the gate and the ground signal on the top electrode of the 1T1R memory device, as well as magnitudes of the the positive bias voltage and the first voltage. The second programming parameters **602B** include programming parameters for the nonvolatile memory device, depending on the type of the memory device to perform the RESET operation and switch it into the HRS. In an implementation where the nonvolatile memory device is the 1R memory device, the second programming parameters **602B** include applying the positive bias voltage to the bottom electrode, and the ground signal to the top electrode of the 1R memory device, as well as a magnitude of the the positive bias voltage such as 1.0V or 0.9V. Further, in an implementation where the nonvolatile memory device is the 1T1R memory device, the second programming parameters **602B** include applying the positive bias voltage to the bottom electrode, the second voltage to the gate and the ground signal to the top electrode of the 1T1R memory device, as well as magnitudes of the the positive bias voltage and the second voltage being above the magnitude of the first voltage in the first programming parameters **602A** of the 1T1R memory device.

At operation **604,** two graphs of cumulative distribution functions, CDFs, of a memory device resistance are plotted based on statistics obtained by performing the setting SET operations and the RESET operations with the first and second programming parameters **602A, 602B** respectively, in a plurality of nonvolatile memory devices and the LRS and HRS target values are fixed using the two plotted CDF graphs. In an implementation, the two CDF graphs are plotted on same graph as it is illustrated in FIG. 5. The target values comprise a Low Resistance State, LRS target value **604A** and a High Resistance State, HRS, target value **604B** that are also referred to as the first threshold and the second threshold respectively.

In an implementation, the LRS target value **604A** is determined as a resistance value at a 50% level of the CDF graph related to the LRS. In another implementation, the HRS target value **604B** is determined as a resistance value at a 50% level of the other CDF graph related to the HRS, for example, as it shown in FIG. 5. The programming scheme of the flowchart **600** allows programming nonvolatile memory devices to have stable and distint states so that they can be used in different implementations of the present disclosure, such as in any of the methods **100, 200, 300** and the identification apparatus **400.**

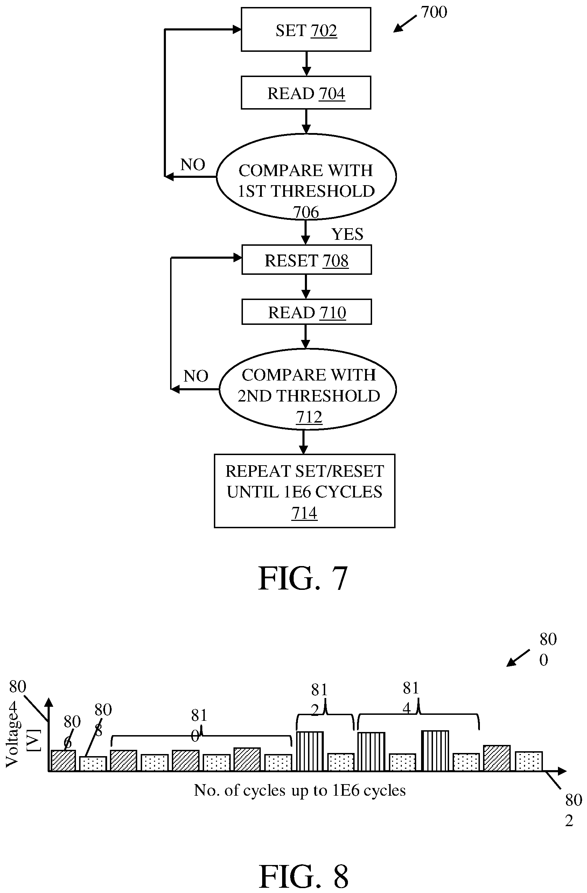

FIG. 7 is a flowchart that depicts a method of cycling a nonvolatile memory device with RESET/SET sequences up to 1 million cycles, in accordance with an embodiment of the present disclosure. With reference to FIG. 7, there is shown a flowchart **700** that depicts the cycling of a nonvolatile memory device with sequences of the RESET/SET operations for up to 1 million cycles. The flowchart **700** includes operations from **702** to **712.**

The flowchart **700** depicts performing the SET and RESET sequences with the nonvolatile memory device for up to 1 million cycles to generate a random pattern in accordance with an embodiment of the present disclosure, for example, the flowchart **700** represents a partial embodiment of the method **100** from FIGs. 1A, 1B. In an implementation, each of the SET/RESET sequences (steps **702-704** and steps **708-710)** is repeated iteratively until the first or the second threshold is met (steps **706** and **712)** correspondoingly. In an implementation, the nonvolatile memory device shall operate without failures during cycling between the states (in SET/RESET sequences) for up to 1 million cycles which allows generating a random pattern of a great size in accordance with an embodiment of the present disclosure.

At an operation **702,** the flowchart **700** includes performing the SET operation to put the nonvolatile memory device into the LRS, for example, by applying the positive bias of voltage to the top electrode and the ground signal to the bottom electrode of the nonvolatile memory device. Thereafter, at operation **704,** the flowchart **700** includes performing the READ operation to read a value of a device resistance of the nonvolatile memory device in the LRS. At operation **706,** the flowchart **700** includes comparing the read value of the device resistance of the nonvolatile memory device with the first threshold that was fixed as the LRS target value during the programming of FIG. 6. In this way, the SET sequence, including the operations **702** to **704,** is repeated until the read value of the device resistance is lower than the first threshold. In an implementation, if the first threshold is not reached, the SET sequence is iteratively repeated for up to a pre-defined number of iterations, such as for up to five iterations. The pre-defined number of iterations depends on a memory technology of the nonvolatile memory device.

In case the value of device resistance read at the operation **704** is lower than or equal to the firs threshold, an operation **708** is performed. At the operation **708,** the flowchart **700** includes performing the RESET operation to put the nonvolatile memory device into the HRS by applying the positive bias of voltage to the bottom electrode and the ground signal to the top electrode of the nonvolatile memory device. After that, at an operation **708,** the READ operation is performed to read a value of the device resistance of the nonvolatile memory device in the HRS.

At an operation **712,** the flowchart **700** includes comparing the read value of the device resistance of the nonvolatile memory device with the second thereshold that was fixed as the HRS target value during the programming of FIG. 6. If the read value of the device resistance is not greater than the second threshold, the RESET sequence, including the operations **706** to **710,** is iteratively repeated until the read value of the device resistance is higher than the second threshold. In an implementation, if the second threshold is not reached, then the RESET sequence is iteratively repeated for up to a pre-defined number of iterations, such as for up to five iterations. The pre-defined number of iterations depends on a memory technology of the nonvolatile memory device. Finally, at an operation **712,** the flowchart **700** includes repeating the both SET and RESET sequences with the nonvolatile memory device for up to 1 million cycles that allows generating a random pattern in accordance with an embodiment of the present disclosure.

FIG. 8 is a graphical representation that depicts a variation of voltage applied to a nonvolatile memory device during the cycling of the same with the SET/RESET sequences, in accordance with an embodiment of the present disclosure, which explains how the nonvolatile memory device is operated during the cycling. With reference to the FIG. 8, there is shown a graphical representation **800,** which includes an X axis **802** of a number of cycles of the SET/RESET sequences (up to 1 million cycles) and a Y axis **804** of voltage (in Volts) applied to the nonvolatile memory device during the cycling of the same.

The graphical representation **800** specifically depicts a bar graph. In an implementation, during the SET operation **702** of FIG. 7, the value of the positive bias of voltage applied to the nonvolatile memory device to put in into the LRS is shown by a first bar **806.** Further, , the value of the lower positive bias of voltage applied to the nonvolatile memory device during the READ operation **704** of FIG. 7 to read the device resistance is shown by a second bar **808.** Further, the graphical representation **800** depicts a set of bars **810,** which shows the values of voltage applied to the nonvolatile memory device during iterative repetitions of the SET sequence until the first threshold is reached (at the operation **706** of FIG. 7). In addition, the graphical representation **800** depicts a pair of bars **812,** which shows the values of voltage applied to the nonvolatile memory device during the RESET operation **708** and the READ operation **710** of FIG. 7 to put the nonvolatile memory device into the HRS and to read the value of device resistance respectively. Further, the graphical representation **800** depicts a set of bars **814,** which shows the values of voltage applied to the nonvolatile memory device during iterative repetitions of the RESET sequence until the second threshold is met.

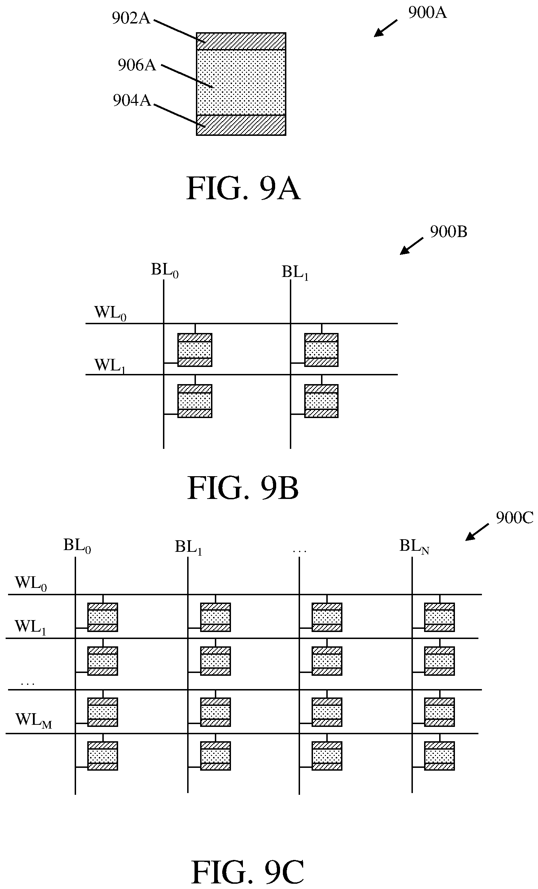

FIGs. 9A, 9B and 9C are schematic diagrams that depict a nonvolatile memory device, a 2*2 mini-array of the nonvolatile memory devices and an N*M array of the nonvolatile memory devices respectively, that can be used in accordance with embodiments of the present disclosure. With reference to FIGs. 9A, 9B and 9C are diagrams that depict a nonvolatile memory device **900A,** a 2*2 mini-array of the nonvolatile memory devices **900B** and an N*M array of the nonvolatile memory devices **900C** respectively. FIGs. 9A, 9B and 9C illustrate schematics of the single memory structure in a metal-insulator-metal stack, and configurations of the 2*2 mini-array and the N*M array of memory devices of said metal-insulator-metal structure.

With reference to FIG. 9A, there is shown the single nonvolatile memory device **900A** that includes a top electrode **902A,** a bottom electrode **904A** and a dielectric layer **906A** that is disposed between the top electrode **902A** and the bottom electrode **904A.** In an implementation, the top electrode **902A** and the bottom electrode **904A** are made of conductive materials, such as metals or metal alloys. Furthermore, the dielectric layer **906A** is a non-conductive material that separates the top electrode **902A** and the bottom electrode **904A** and serves as a barrier to prevent electrical current from flowing between the top electrode **902A** and the bottom electrode **904A.** In case a voltage is applied to the top electrode **902A** or to the bottom electrode **904A,** an electric field gets generated across the dielectric, which can be used to store and retrieve data (bit values) from the single nonvolatile memory device. With reference to FIG. 9B, there is shown the 2*2 mini-array of the nonvolatile memory devices **900B,** which includes four nonvolatile memory devices of the same metal-insulator-metal structure as shown in FIG. 9A that are arranged in a configuration with rows and columns that are defined by word (WL) and bit lines (BL) respectively. The top electrodes of each of the nonvolatile memory devices of the mini-array are connected to one of the word lines WL₀ and WL₁, and the bottom electrodes of each nonvolatile memory device of the mini-array are connected to one of the bit lines BL₀ and BL₁. With reference to FIG. 9C, there is shown the N*M array of the nonvolatile memory devices **900C,** wherein the nonvolatile memory devices are arranged in M rows and N columns (where M and N are positive integers). Furthermore, the top electrodes of each of the nonvolatile memory devices of the array are connected to one of the N word lines WL₀, WL₁, ..., up to WL_{N}, and the bottom electrodes of each of the nonvolatile memory devices **900C** are connected to one of the M bit lines WL₀, WL₁, ..., up to WL_{N}. The configurations of the mini-array **900B** and the array **900C** provide for parallel or multibit programming and reading of the nonvolatile memory devices in the arrays which can be beneficially used in embodiments of the present disclosure, for example, in implementation forms of the method **200.**

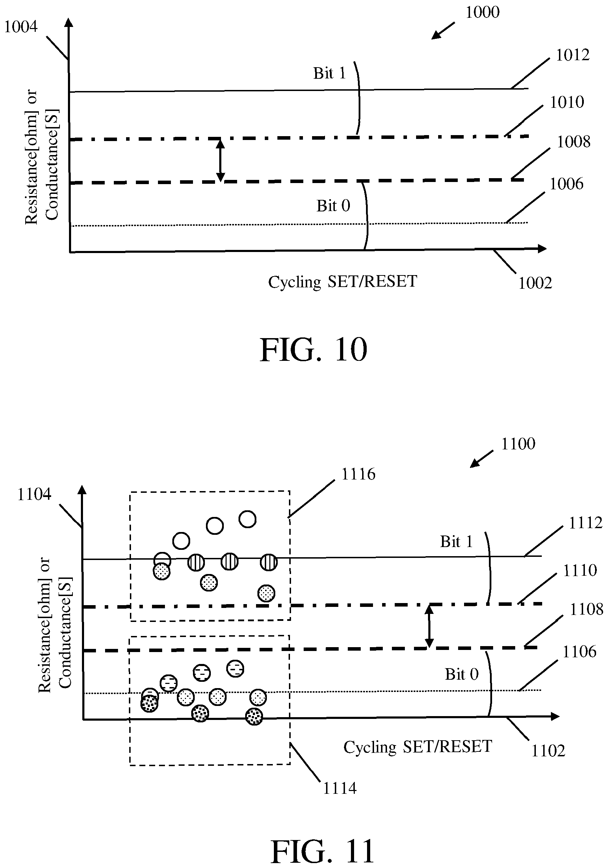

FIG 10 is a graphical representation that depicts a resistance (ohm) or conductance (S) of a nonvolative memory device in the low and high resistance states, i.e. in the LRS and the HRS. With reference to FIG. 10, there is shown the graphical representation **1000** that depicts a variation of a memory device resistance (ohm) or conductance (S) in the LRS and the HRS respectively.

The graphical representations **1000** illustrate an ideal case where the nonvolative memory device behaviour is stable with time, during the cycling of the device between the states with the SET and RESET sequnces, i.e. the device resisistance value in the LRS maintains the same and the device resisistance value in the HRS maintains the same in different cycles. The graphical representation **1000** depicts an X axis **1002** of a time or a number of cycles during the cycling of a single nonvolatile memory device, such as the nonvolatile memory device **900A.** In an implementation, the cycling refers to a number of cycles of performinig the SET and RESET sequences with the single nonvolatile memory device, for example, as shown in FIGs. 7 and 8. Further, the graphical representation **1000** depicts a Y axis **1004** of a resistance/conductance of the single nonvolatile memory device read in said cycles. Further, the graphical representation **1000** shows a first line **1006,** that depicts all the equal values of the device resistance/conductance of the single nonvolatile memory device read in the LRS (after the successful SET operation) in different cycles, and a second line **1008,** that depicts the first threshold set for the single nonvolatile memory device, for example, as described with reference to FIGs. 5 and 6. Moreover, the graphical representation **1000** shows a third line **1010** that depicts the second threshold set for the nonvolatile memory device and a fourth line **1012** that depicts all the equal values of the device resistance/conductance of the single nonvolatile memory device read in the HRS (after the successful RESET operation) in different cycles. The ideal case representation **1000** of FIG. 10 is shown for illustration purposes only, since in practice the effects of the cycle to cycle variability and the device to device variability, that are intrinsic properties of nonvolatile memory devices, do not allow for maintaining the device behaviour stable with time as detailed below.

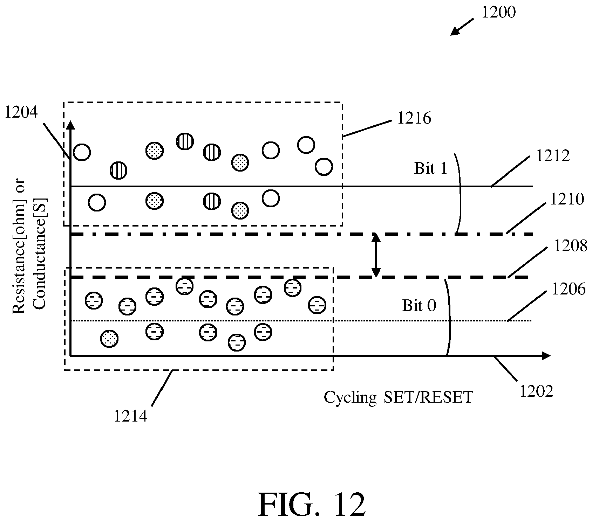

FIGs. 11 and 12 are graphical representations that depict possible types of variability in behaviour of a nonvolatile memory device during the cycling of the same with the SET/RESET sequences that is used to generate random patterns, in accordance with an embodiment of the present disclosure. With reference to FIGs. 11 and 12, there are shown graphical representations **1100** and **1200** that depict possible types of variability in the behaviour of a nonvolatile memory device, such as the nonvolative memory device **900A,** during the cycling of the same with the SET/RESET sequences, for example, as shown in FIG. 7, to generate random patterns. The graphical representations **1100** and **1200** depict possible types of variability in the behaviour of the nonvolatile memory devices.

The graphical representations **1100** includes an X axis **1102** of a time or a number of cycles of the nonvolatile memory device with the SET/RESET sequences and a Y axis **1104** of a resistance (ohm) or conductance (S) of the nonvolatile memory device. Further, the graphical representation **1100** depicts a first line **1106** showing a low reference value of resistance or conductance of the nonvolatile memory device in the LRS equal to the ideal case value **1006** of FIG. 10, a second line **1108** and a third line **1110** showing the first threshold and the second threshold, set for the nonvolatile memory device as described above with reference to FIGs. 5 and 6, and a fourth line **1112** showing a high reference value of resistance/conductance of the nonvolatile memory device in the HRS equal to the ideal case value **1012** of FIG. 10. Moreover, the graphical representation **1100** depicts a first set of points **1114,** which shows three possible trends in variability of the device behaviour during the cycling, each time when the device is put into the LRS with the SET operations, and a second set of points **1116,** which shows three possible trends in variability of the device behaviour during the cycling, each time when the device is put into the HRS with the RESET operations. The sets of points **1114** and **1116** show that the resistance or conductance of the nonvolatile memory device with time (in different cycles) may have a tendency to increase, to remains stable to an extend (close to the reference values), or to decreases with increasing the cycle number, which is dependent on a type of memory technology and the programming parameters used in each particular case, but in any case, the nonvolatile memory device has a stochastic behaviour with random variations observed each time when the device resistance is measured.

The graphical representation **1200** shows another type of variability in behaviour of a nonvolatile memory device during the cycling of the same which is the most probable and is characterized by fully stochastic variations of the device resistance with time, the representation **1200** includes an X axis **1202** of a time or a number of cycles with the SET/RESET sequences of the nonvolatile memory device and a Y axis **1204B** of a resistance (ohm) or conductance (S) of the nonvolatile memory device. Further, the graphical representation **1200** depicts a first line **1206** showing a low reference value of resistance or conductance of the nonvolatile memory in the LRS equal to the ideal case value **1006** of FIG. 10, a second line **1208** and a third line **1210B** showing the first threshold and the second threshold, set for the nonvolatile memory device as described above with reference to FIGs. 5 and 6, and a fourth line **1212** showing a high reference value of resistance/conductance in the HRS equal to the ideal case value **1012** of FIG. 10. Moreover, the graphical representation **1200** depicts a first set of points **1214,** which shows random variations in behaviour of the nonvolatile memory device from cycle to cycle when the device is put into the LRS by the SET operation, and a second set of points **1216,** which shows random variations in behaviour of the nonvolatile memory device from cycle to cycle, each time when the device is put into the HRS by the RESET operation. Said stochastic behaviour of nonvolatile memory devices are used for generating random patterns in embodiments of the present disclosure.

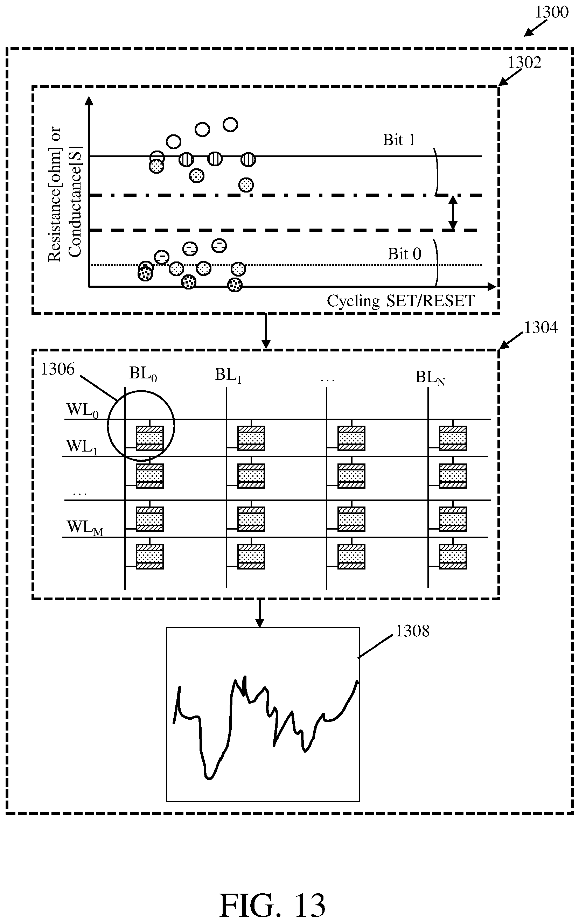

FIG. 13 is a schematic diagram that depicts a scheme of parallel programming and reading for an array of nonvolatile memory devices to generate random patterns, in accordance with an embodiment of the present disclosure. With reference to FIG. 13, there is shown a schematic diagram **1300** that depicts a scheme of parallel programming and reading for an array of nonvolatile memory devices **1304** to generate random patterns.

In operation, each nonvolatile memory device of the array **1304,** such as the array **900C,** shows stochastic behaviour as explained above with reference to FIGs. 11 and 12, thereby each nonvolatile memory device of the array **1304** has a different, unique resistance value in each new cycle of the operation, after performing the SET operation and the RESET operation as described above, for example, the stochastic behaviour of a nonvolatile memory device **1306** from the array of nonvolatile memory devices **1304** during the cycling of said device with the SET/RESET sequences is shown in a graphical representation **1302.** Due to the stochastic behaviour of nonvolatile memory devices, the resistance or conductance of the single nonvolatile memory device **1306** may changes randomly in each cycle of the device operation, with or without particular tendency depending on the type of memory technology and the memory device programming parameters in each particular case. Further, in response to performing any of the SET operation and the RESET operation with each nonvolatile memory device of the array **1304,** that can be done in parallel because of the array configuration, each of the nonvolatile memory devices will have a randon and unique device resistance value, and a plurality of said random device resistance values can be read in parallel by the READ operations, as described above, for example with refence to FIGs. 2A, 2B and 3A, 3B. In that way, a multiplicity of random patterns are generated by summing up the random outputs of the nonvolatile memory devices **1304,** which is shown by a graphical representation **1308.** In an example, each random pattern can be in a form of a combination of random bit values (00000.......11111....). The summing up of random outputs of the plurality ofnonvolatile memory devices **1304** in the array instead of cycling a single nonvolatile memory device is beneficial to engage the device to device variability effects into the random pattern generation, to increase the efficiency by means of parallel or miltibit programming and reading and to enable longer lifetime of nonvolatile memory devices.

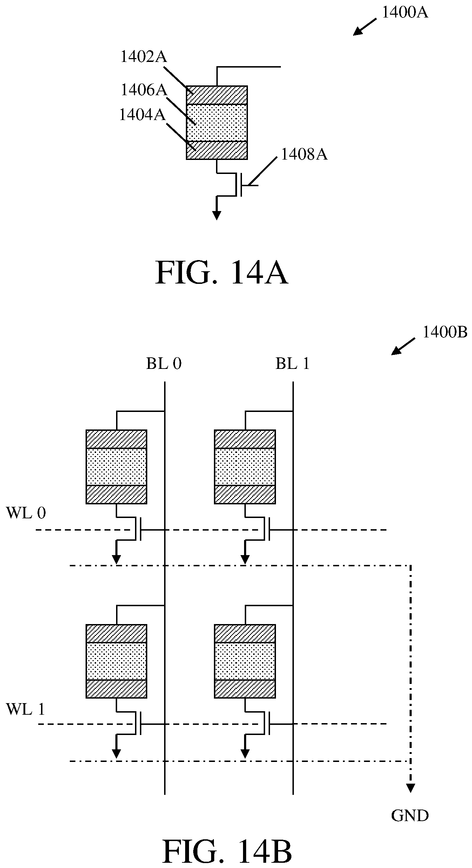

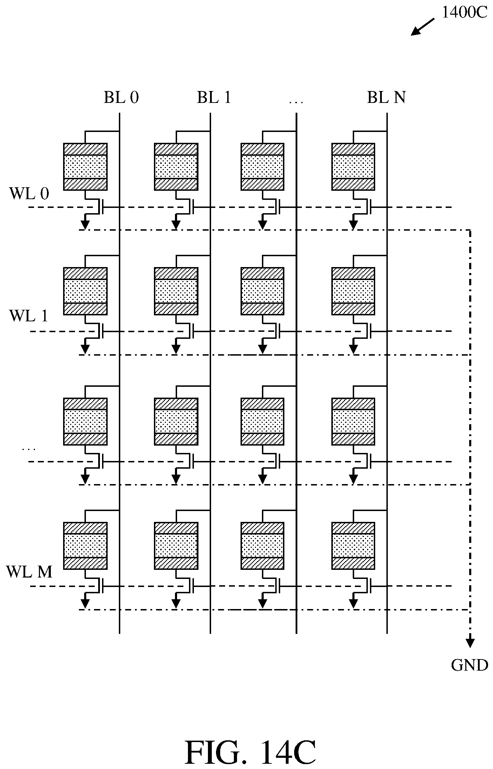

FIGs. 14A, 14B and 14C are schematic diagrams that depict a one transistor one resistor, 1T1R memory device, a 2*2 mini-array of 1T1R memory devices and an N*M array of 1T1R memory devices respectively, that can be used in accordance with embodiments of the present disclosure. With reference to FIGs. 14A, 14B and 14C, there are shown schematic diagrams that depict a 1T1R memory device **1400A,** a 2*2 mini-array of 1T1R memory devices **1400B** and an N*M array of 1T1R memory devices **1400C** respectively.

With reference to FIG. 14A the 1T1R memory device **1400A** is illustrated, which includes a top electrode **1402A,** a bottom electrode **1404A** and a dielectric layer **1406A** disposed between the top electrode **1402A** and bottom electrode **1404A.** Further, a transistor **1408A** is connected to the bottom electrode **1404A.** With reference to FIG. 14B, there is shown the 2*2 mini-array of 1T1R memory devices **1400B.** The top electrodes of all the 1T1R memory devices **1400B** are connected to one of the bit lines, BL, such as BL₀ and BL₁ and the bottom electrodes of all the 1T1R memory devices **1400B** are grounded. Further, gates of the transistors of all the 1T1R memory devices **1400B** are connected to one of word lines, WL, such as WL₀ and WL₁. With reference to FIG. 14C, there is shown the N*M array of 1T1R memory devices **1400C,** which includes N columns and M rows (where N and M are positive integers) of the 1T1R memory devices. The top electrodes of all the 1T1R memory devices **1400C** are connected to one of the bit lines, BL, such as BL₀, BL₁,.... up to BL_{N}, and the bottom electrodes of all the 1T1R memory devices **1400C** are grounded, and the gates of all 1T1R memory devices **1400C** are connected to one of the word lines, WL, such as WL₀, WL₁,.... up to WL_{N}. The array configuration as illustrated in FIGs. 14B and 14C allows for implementing efficient parallel/multibit programming and reading for the plurality of 1T1R memory devices in the array.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A method (100) of generating a random pattern with a nonvolatile memory device, the method (100) comprising:
configuring a nonvolatile memory device to
store a bit 0 value if a device resistance is below a first threshold in a Low-Resistance state, LRS, when a positive bias of voltage is applied to a top electrode and a ground signal is applied to a bottom electrode of the nonvolatile memory device,
store a bit 1 value if the device resistance is above a second threshold in a High-Resistance State, HRS, when the positive bias of voltage is applied to the bottom electrode and the ground signal is applied to the top electrode, and
provide for reading a value of the device resistance in response to a low bias of voltage,
wherein the low bias of voltage is three or more times below the positive bias of voltage applied to put the nonvolatile memory device into the LRS and the HRS, and the second threshold is above the first threshold,
cycling the nonvolatile memory device between the states in a plurality of cycles, wherein each cycle comprises:
iteratively performing a SET operation to put the nonvolatile memory device into the LRS and a READ operation to read a value of the device resistance, until the SET operation is successful when the read value is below the first threshold, or unsuccessful when an end of cycle condition is met, and
iteratively performing a RESET operation to put the nonvolatile memory device into the HRS and a READ operation to read a value of the device resistance, until the RESET operation is successful when the read value is above the second threshold, or unsuccessful when the end of cycle condition is met, and
generating a random pattern by summing up the values of the device resistance read in all the cycles where the SET and RESET operations are successful.

2. The method (100) of claim 1, wherein the first threshold is defined as a 50% of a cumulative distribution function, CDF, of a device resistance obtained by measuring the device resistance of a plurality of nonvolatile memory devices in the LRS, and the second threshold is defined as a 50% of a CDF of a device resistance obtained by measuring the device resistance of a plurality of nonvolatile memory devices in the HRS.

3. The method (100) of claim 1 or 2, wherein the nonvolatile memory device comprises a One Transistor One Resistor, 1T1R, memory device, wherein the 1T1R memory device is in the LRS when the positive bias of voltage is applied to the top electrode, the ground signal is applied to the bottom electrode and a first voltage is applied to a gate of the 1T1R memory device, and the 1T1R memory device is in the HRS when the positive bias of voltage is applied to the bottom electrode, the ground signal is applied to the top electrode and a second voltage is applied to the gate, wherein the second voltage is above the first voltage.

4. The method (100) of any of claims 1 to 3, wherein the end of cycle condition is met when a pre-defined number of iterations is reached, wherein the pre-defined number of iterations depends on a memory technology of the nonvolatile memory device, the nonvolatile memory device comprises one of a Resistive Random-Access Memory, RRAM, a Phase-Change Memory, PCM, a Magnetoresistive Random-Access Memory, MRAM, and a Ferroelectric Random-Access Memory, FeRAM, and the cycling of the nonvolatile memory device between states comprises up to 1 million cycles.

5. The method (100) of any of claims 1 to 4, further comprising:
configuring one or more second nonvolatile memory devices of the same type as the nonvolatile memory device to store a bit 0 value if the device resistance is below the first threshold in the LRS and a bit 1 value if the device resistance is above the second threshold in the HRS, and to provide for reading a value of the device resistance in response to a low bias of voltage,
cycling each of the one or more second nonvolatile memory devices between the states in a plurality of cycles, wherein each cycle comprises:
iteratively performing a SET operation to put the second nonvolatile memory device into the LRS and a READ operation to read a value of the device resistance, until the SET operation is successful when the read value is below the first threshold, or unsuccessful when the end of cycle condition is met, and
iteratively performing a RESET operation to put the second nonvolatile memory device into the HRS and a READ operation to read a value of the device resistance, until the RESET operation is successful when the read value is above the second threshold, or unsuccessful when the end of cycle condition is met, and
generating one or more second random patterns by summing up the values of the device resistance read in all the cycles where the SET and RESET operations are successful.

6. A method (200) of generating a random pattern with an array of nonvolatile memory devices, wherein top electrodes of the nonvolatile memory devices in the array are connected to one of M word lines and bottom electrodes of the nonvolatile memory devices in the array are connected to one of N bit lines of the array, the method (200) comprising:
configuring each nonvolatile memory device of the array to
store a bit 0 value if the device resistance is below a first threshold in a Low-Resistance State, LRS, when a positive bias of voltage is applied to a top electrode and a ground signal is applied to a bottom electrode of the nonvolatile memory device,
store a bit 1 value if the device resistance is above a second threshold in a High-Resistance State, HRS, when the positive bias of voltage is applied to the bottom electrode and the ground signal is applied to the top electrode, and
provide for reading a value of the device resistance in response to a low bias of voltage,
wherein the low bias of voltage is three or more times below the positive bias of voltage applied to put the nonvolatile memory device into the LRS and the HRS, and the second threshold is above the first threshold,
performing a SET operation for the N*M nonvolatile memory devices of the array to put them into the LRS by applying a ground signal to the bit lines and the positive bias of voltage to the word lines of the array,
performing a READ operation for the N*M nonvolatile memory devices of the array to read a value of the device resistance of each nonvolatile memory device in the LRS in the array, and
generating a random pattern by summing up the values of the device resistance read in the array of nonvolatile memory devices.

7. The method (200) of claim 6, wherein the first threshold is defined as a 50% of a cumulative distribution function, CDF, of a device resistance obtained by measuring the device resistance of a plurality of nonvolatile memory devices in the LRS, and the second threshold is defined as a 50% of a CDF of a device resistance obtained by measuring the device resistance of a plurality of nonvolatile memory devices in the HRS.

8. The method (200) of claim 6 or 7, further comprising:
performing a RESET operation for the N*M nonvolatile memory devices of the array to put them into the HRS by applying the ground signal to the word lines and the positive bias of voltage to the bit lines of the array, and
performing a READ operation for the N*M nonvolatile memory devices of the array to read a value of the device resistance of each nonvolatile memory device in the HRS in the array.

9. The method (200) of any of claims 6 to 8, further comprising:
repeating the performing of the SET and/or RESET operations for the N*M nonvolatile memory devices of the array to put them into the LRS and/or the HRS, the performing of the READ operations to read values of the device resistance of the N*M nonvolatile memory devices after said SET and/or RESET operations and then the generating of a random pattern a plurality of times to obtain a plurality of random patterns.

10. A method (300) of generating a random pattern with an array of One Transistor One Resistor, 1T1R, memory devices, wherein each memory device is connected in series with a transistor in each cross of a word line and a bit line of the array, top electrodes of the memory devices in the array are connected to one of N bit lines of the array, gates of the memory devices in the array are connected to one of M word lines, and bottom electrodes of the memory devices in the array are grounded, the method (300) comprising:
configuring each 1T1R memory device of the array to
store a bit 0 value if the device resistance is below a first threshold in a Low-Resistance State, LRS, when a positive bias of voltage is applied to the top electrode, a first voltage is applied to the gate and a ground signal is applied to the bottom electrode of the memory device,
store a bit 1 value if the device resistance is above a second threshold in a High-Resistance State, HRS, when the positive bias of voltage is applied to the bottom electrode, a second voltage is applied to the gate and the ground signal is applied to the top electrode, and
provide for reading a value of the device resistance in response to a low bias of voltage,
wherein the second voltage is above the first voltage, the low bias of voltage is three or more times below the positive bias of voltage which is applied to put the 1T1R memory device into the LRS and the HRS, and the second threshold is above the first threshold,
performing a SET operation for the N*M 1T1R memory devices of the array simultaneously to put them into the LRS by applying a ground signal to the bit lines and a positive bias of voltage to the word lines of the array,
performing a READ operation for the N*M 1T1R memory devices of the array simultaneously to read a value of the device resistance of each 1T1R memory device in the LRS in the array, and
generating a random pattern by summing up the values of the device resistance read in the array of 1T1R memory devices.

11. The method (300) of claim 10, wherein the first threshold is defined as a 50% of a cumulative distribution function, CDF, of a device resistance obtained by measuring the device resistance of a plurality of 1T1R memory devices in the LRS, and the second threshold is defined as a 50% of a CDF of a device resistance obtained by measuring the device resistance of a plurality of 1T1R memory devices in the HRS.

12. The method (300) of claim 10 or 11, further comprising:
performing a RESET operation for all the 1T1R memory devices of the array simultaneously to put them into the HRS by applying the ground signal to the word lines and the positive bias of voltage to the bit lines of the array, and
performing a READ operation for all the 1T1R memory devices of the array simultaneously to read a value of the device resistance of each 1T1R memory device in the HRS in the array.

13. The method (300) of any of claims 10 to 12, further comprising:
repeating the performing of the SET and/or RESET operations for the N*M 1T1R memory devices of the array to put them into the LRS and/or the HRS, the performing of the READ operations to read values of the device resistance of the N*M 1T1R memory devices after said SET and/or RESET operations and then the generating of a random pattern a plurality of times to obtain a plurality of random patterns.

14. An identification apparatus (400) configured for implementing a method of generating a random pattern according to any of claim 1 to 13 and for providing a unique identifier using the generated random pattern.

15. The identification apparatus (100) of claim 14, being configured for operating as a physical unclonable function, PUF, and/or a security key.
